# EUROPEAN PATENT SPECIFICATION

(11) **EP 0 733 830 B1**
(45) Date of publication and mention of the grant of the patent: **23.01.2002**
(21) Application number: 96104523.4
(22) Date of filing: 21.03.1996
(51) Int. Cl.: F16H 61/00, F16H 37/08

(54) **Continuously variable transmission**
Stufenloses Getriebe
Transmission à variation continue

(30) Priority: 24.03.1995 JP 6623495; 26.05.1995 JP 12870295; 26.05.1995 JP 12870195
(43) Date of publication of application: 25.09.1996
(73) Proprietor: AISIN AW CO., LTD., Anjo-shi Aichi-ken (JP)
(72) Inventor: Moroto, Shuzo, Anjo-shi, Aichi-ken (JP); Taniguchi, Takao, Anjo-shi, Aichi-ken (JP); Miyagawa, Shoichi, Anjo-shi, Aichi-ken (JP); Sakakibara, Shiro, Anjo-shi, Aichi-ken (JP); Tsukamoto, Kazumasa, Anjo-shi, Aichi-ken (JP); Inuzuka, Takeshi, Anjo-shi, Aichi-ken (JP); Hattori, Masashi, Anjo-shi, Aichi-ken (JP)
(74) Representative: VOSSIUS & PARTNER

(56) References cited:
- EP-A- 0 304 085
- EP-A- 0 431 771
- GB-A- 2 284 870
- US-A- 4 990 127
- US-A- 5 005 442
- US-A- 5 045 028
- PATENT ABSTRACTS OF JAPAN vol. 011, no. 057 (M-564), 21 February 1987 & JP 61 218860 A (AISIN WARNER), 29 September 1986,

## Description

The present invention relates to a continuously variable transmission using a belt type continuously variable transmission unit composed of a primary pulley and a secondary pulley composed of two sheaves and a belt trained around the primary and secondary pulleys, and more specifically, to control of the axial forces of the belt type continuously variable transmission unit when Low mode and High mode are switched in a continuously variable transmission composed of the combination of the belt type continuously variable transmission unit and a planetary gear which is particularly suitable as a transmission in automobiles.

Recently, an automatic continuously variable transmission having a belt type continuously variable transmission unit assembled therein has attracted attention as a transmission for automobiles to cope with the requirement for improving a fuel consumption ratio, a driving capability, and the like.

As shown in, for example, Japanese Patent Application Laid-open No.7-331000, an automotive continuously variable transmission comprising a continuously variable transmission unit, an uniform transmission unit, a planetary gear, first and second clutches has been proposed, in which an output side of the torque converting unit is coupled to the planetary gear, and also the first clutch is interposed between an output side of the continuously variable transmission unit and a sun gear so as to pass a part of the circulating force through the first clutch.

In the above continuously variable transmission, an output side of the uniform transmission unit and an output side of the continuously variable transmission unit are transmitted to the carrier and the sun gear of the planetary gear and coupled as an output of internal (ring) gear. At this moment, a gear ratio of the continuously variable transmission unit is shifted from the state of small (under drive) to the state of large (over drive) by means of power (torque) circulation, resulting that a gear ratio of the whole transmission is shifted from the state of large to the state of small. In addition, the output side of the continuously variable transmission unit is entirely outputted as an output of the whole transmission by releasing the first clutch and engaging the second clutch. Therefore, a transmission gear ratio of the continuously variable transmission unit entirely becomes that of the transmission on the whole.

That is, in the Low mode where the above first clutch is engaged, the continuously variable transmission unit transmits the power from the secondary side to the primary side thereof by means of the torque circulation. In the High mode where the second clutch is engaged, the continuously variable transmission unit transmits the power from the primary side to the secondary side thereof by means of the torque circulation.

The belt type continuously variable transmission performs a transmission by changing a pulley ratio by achieving a change in axial forces (belt holding pressures) that effect on the drive side and the driven side of both pulleys, respectively. For the power transmission by adjusting both pulleys to the predetermined pulley ratio, a ratio of axial force to be effected on both pulleys should be adjusted to the predetermined level. In this case, however, it is required that an axial force of the drive side pulley is higher than that of the driven side pulley.

Even though the direction of transmitting the power is changed in accordance with shifting between the Low mode and the High mode in the above continuously variable transmission, there is no consideration given to the axial forces of the above pulleys. The transmission control at the time of shifting between the Low 'mode and High mode becomes inconvenience. Consequently the transmission control takes much time to become stable and it might result in a delay in response.

US-A-4 990 127, in accordance with the preamble of claims 1 and 4, relates to a dual range infinitely variable transmission utilizing a continuously variable speed mechanism in conjunction with a fixed ratio speed mechanism to provide two power paths from the input to the rotatable output. A jaw clutch is utilized to switch between the high range and low range of the transmission. A reaction type clutch is utilized to provide a positive neutral for the transmission.

US-A-5 045 028 discloses a cone disk transmission having an infinitely settable and variable ratio. The transmission uses two pairs of cone disks connected by a coupling belt or chain. One cone disk of each pair is axially displaceable, and selectively positionable against the traction element running between the cone pairs by a hydraulic positioning system, for generating engagement or gripping or clamping forces. The positioning pressure is controlled by pressure fluid derived from a spool valve. Torque sensors located on the transmission shafts throttle return flow of hydraulic pressure fluid from the control valve. as a function of load. The torque sensors are immediately activated as a function of the intended operating state of the transmission, that is, the direction of transfer of power between the pairs of cone disks, by coupling both of the torque sensors to a transfer valve operated by a clutch engagement pressure, or to the spool valve in parallel, in series, or cross-connected directly from a 2-return pressure line spool valve.

Patent Abstracts of Japan, volume 11, number 57 (M-564) February 21, 1987 and JP-A-61-218860 disclose a stepless speed changer with V-belt. To control the torque ratio, the oil pressure is supplied or exhausted to/from oil chambers in pulleys by the use of a valve so as to change the effective belt diameter of each pulley. In response to the torque ration control, an oil pressure in accordance with the axial force ratio is held in one oil chamber in a first pulley during positive torque transmission, and an oil pressure in accordance with the axial force ratio is held in another oil chamber in the second pulley during negative torque transmission.

An object of the present invention is to provide a continuously variable transmission capable of solving the above problem by changing the axial forces acting on both the pulleys of a belt type continuously variable transmission unit. This object is achieved with the features of the claims.

On the basis of the construction of the present invention, if the Low-High shifting means (60, 60', 601) is in the Low (L) mode by which the first clutch (CL) is engaged, revolutions of the input shaft (3) is transmitted to the second revolution element (e.g., sun gear 19s) through the belt type continuously variable transmission unit (11) where the revolutions thereof are changed and to the first rotary element (e.g.. carrier 19c) of the planetary gear (19) through the first clutch (C_{L}). Then the revolutions are compounded together and the resultant of a set thereof is outputted to the output shaft (5).

If the Low-High shifting means is in the High (H) mode by which the second clutch (C_{H}) is engaged, revolutions of the input shaft (3) is directly transmitted to the output shaft (5) via the belt type continuously variable transmission (11) and second clutch (C_{H}).

Then an axial force of the first or second pulley (7) (9) is changed as a result of controlling the axial force actuating means (32) (33) by the control means (54, 54,', 541, 542) on the basis of the Low mode and the High mode by the Low-High shifting means. Consequently. a pulley ratio of the belt type continuously variable transmission unit is changed into a predetermined ratio.

At this time. the direction of transmitting torque of the belt type continuously variable transmission unit (11) is switched by a shifting movement of the Low-High shifting means. As the Low-High shifting means shift the mode. the switching means (q ~ w. 79, 80) reverses the magnitudes of axial forces of the first and second pulley (7) (9) with respect to each other so as to correspond with the direction of transmitting torque of the switched belt type continuously variable transmission.

Furthermore. reference numerals and signs in the parentheses is only used for contracting with the attached figures, so that the construction of the present invention is not limited thereby.

In the following preferred embodiments of the pressent invention will be described with reference to the drawings, in which:
FIG. 1 shows an embodiment of a power transmission mechanism in a continuously variable transmission according to the present invention, wherein FIG. 1(a) is a skeleton diagram and FIG. 1(b) is a graph showing a speed;
FIG. 2 is a graph showing the change of output torque relating to the torque ratio of a belt type continuously variable transmission (CVT) unit of the continuously variable transmission;
FIG. 3 is a graph showing the change of output r.p.m. relating to the torque ratio of the CVT unit;
FIG. 4 is a cross sectional view showing double chamber type hydraulic servos applying axial forces to primary and secondary pulleys;
FIG. 5 is a hydraulic piping diagram of a hydraulic control mechanism of the continuously variable transmission showing a low (L) mode state in a D range;
FIG. 6 is a diagram showing a high (H) mode state in the D range in the hydraulic piping diagram;
FIG. 7 is a diagram showing an R range in the hydraulic piping diagram;
FIG. 8 is a table showing the operation of the hydraulic control mechanism;
FIG. 9 is a cross sectional view showing double regulator type hydraulic servos;
FIG. 10 is a hydraulic piping diagram of a hydraulic control mechanism of the double regulator type hydraulic servos showing a low (L) mode state in a D range;
FIG. 11 is a diagram showing a high (H) mode state in the D range in the hydraulic piping diagram;
FIG. 12 is a diagram showing an R range in the hydraulic piping diagram;
FIG. 13 is a table showing the operation of the hydraulic control mechanism;
FIG. 14 is a diagram showing a partially modified hydraulic control mechanism applicable to the above double chamber type hydraulic servos;
FIG. 15 is a diagram showing a partially modified hydraulic control mechanism applicable to the above double chamber type hydraulic servos;
FIG. 16 is a block diagram showing an electric control mechanism according to the embodiment;
FIG. 17 is a general flowchart showing the electric control mechanism;
FIG. 18 is a flowchart showing a reverse (R) range control subroutine of the electric control mechanism;
FIG. 19 is a flowchart showing up-shift control of the electric control mechanism;
FIG. 20 is a flowchart showing a Lo → Hi determining subroutine of the electric control mechanism;
FIG. 21 is a flowchart showing down-shift control of the electric control mechanism;
FIG. 22 is a flowchart showing a Hi → Lo determining subroutine of the electric control mechanism;
FIG. 23 is a graph showing the balance between the axial forces of the primary and secondary pulleys;
FIG. 24 shows another embodiment of the above power transmission mechanism, wherein FIG. 24(a) is a skeleton diagram and FIG. 24(b) is a graph showing a speed;

Embodiments of the present invention will be described below with reference to the drawings.

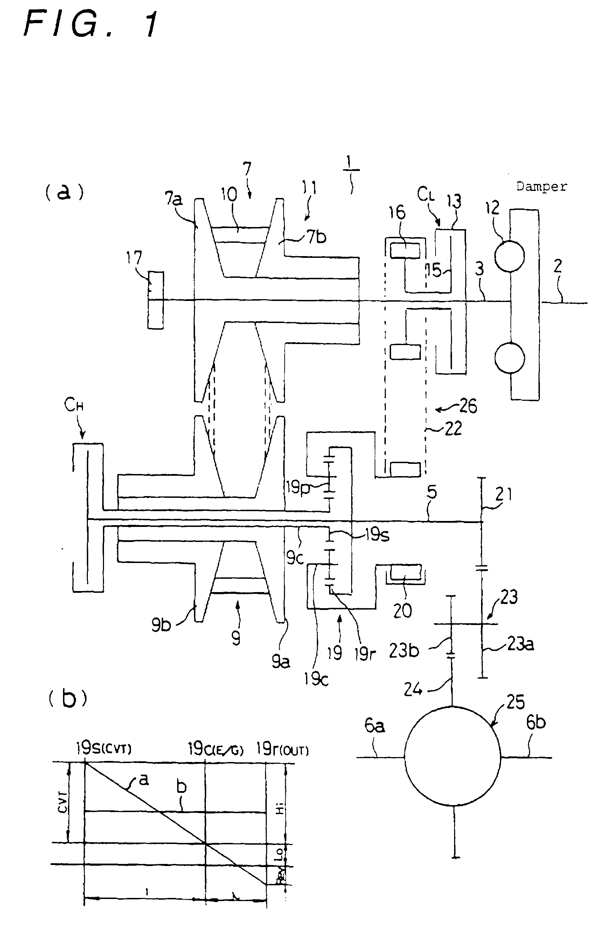

First, a power transmission mechanism of a continuously variable transmission according to the present invention will be described with reference to FIG. 1(a). A vehicle-mounted automatic continuously variable transmission 1 has a first shaft 3 aligned with an engine crank shaft 2, a second shaft 5 and a third shaft 6 (a, b) aligned with a front wheel shaft. A primary pulley 7 is supported by the input shaft 3, a secondary pulley 9 is supported by the second shaft 5 and a belt 10 is trained around these two pulleys 7, 9 to thereby constitute a belt type continuously variable transmission unit 11.

Further, the first shaft 3 is coupled with the engine crank shaft 2 through a damper 12 to thereby constitute an input shaft. The input side member 13 of a low clutch C_{L} is fixed to the input shaft 3 as well as the output side member 15 of the low clutch C_{L} is rotatably supported by the input shaft 3 and further a primary side sprocket 16 constituting the power transmission means is coupled with the output side member 15 integrally therewith. In addition, the fixed sheave 7a of the primary pulley 7 is fixed to the input shaft 3 as well as an oil pump 17 is coupled with the extreme end of the input shaft 3 and a movable sheave 7b is axially movably supported by the fixed sheave 7a.

The secondary pulley 9 is rotatably supported by the second shaft 5 and has a fixed sheave 9a, a movable sheave 9b axially movably supported by the fixed sheave and a secondary shaft 9c integrally coupled with the fixed sheave. Further, a high clutch C_{H} is interposed between the second shaft 5 and the secondary shaft 9c, a planetary gear 19 is disposed to the second shaft 5 as well as a secondary side sprocket 20 is rotatably supported by the output shaft 5. The output shaft 5 has an output gear 21 fixed at an end thereof to thereby constitute an output shaft.

The planetary gear 19 is composed of a single pinion planetary gear having a sun gear 19s, a ring gear 19r and a carrier 19c rotatably supporting pinions 19p each meshed with both the sun gear and ring gear. The sun gear 19s is coupled with the secondary shaft 9c to thereby constitute a second rotary element, the ring gear 19r is coupled with the output shaft 5 to thereby constitute a third rotary element and the carrier 19c is coupled with the secondary side sprocket 20 to thereby constitute a first rotary element. Further, a training member 22 such as a silent chain, roller chain, timing belt or the like is trained around the primary side and secondary side sprockets 16, 20.

The gear 21 fixed to the output shaft 5 is meshed with the large gear 23a of a speed reduction gear unit 23 and the small gear 23b of the unit is meshed with the ring gear 24 of a differential gear unit 25 which outputs a differential rotation to right and left axle shafts 6a, 6b constituting the third shaft.

Next, operation based on the power transmission mechanism of the continuously variable transmission 1 will be described with reference to FIG. 1(a), FIG. 1(b), FIG. 2 and FIG. 3. The rotation of the engine crank shaft 2 is transmitted to the input shaft 3 through the damper 12. In a low mode in which the low clutch C_{L} is connected and the high clutch C_{H} is disconnected, the rotation of the input shaft 3 is transmitted to the primary pulley 7 as well as to the carrier 19c of the planetary gear 19 through the power transmission unit 26 composed of the primary side sprocket 16, training member 22 and secondary side sprocket 20. Whereas, the rotation of the primary pulley 7 is continuously varied by the pulley ratio of the primary and secondary pulleys is properly adjusted by an axis force actuating means such as a hydraulic servo and the like to be described later and transmitted to the secondary pulley 9 and further the speed-changed rotation of the pulley 9 is transmitted to the sun gear 19s of the planetary gear 19.

As shown in the graph of a speed of FIG. 1(b), the carrier 19c to which a constant speed rotation is transmitted through the power transmission unit 26 acts as a reaction element in the planetary gear 19 and a continuously variable rotation is transmitted from the belt type continuously variable transmission (hereinafter, referred to as CVT) unit 11 to the sun gear 19s, and the rotations of these carrier and sun gear are synthesized and transmitted to the output shaft 5 through the ring gear 19r. At the time, since the output shaft 5 is coupled with the ring gear 19r which is a rotary element other than a reaction support element, torque circulation is caused to the planetary gear 19 as well as the sun gear 19s and the carrier 19c are rotated in the same direction. As a result, the output shaft 5 is rotated in a forward (Lo) direction and a reverse (Rev) direction across a zero rotation. That is, when the output shaft 5 is rotated in the forward (advancing) direction based on the torque circulation, the belt type continuously variable transmission unit 11 transmits torque from the secondary pulley 9 to the primary pulley 7, whereas when the output shaft 5 is rotated in the backward (retracting) direction, the transmission unit 11 transmits torque from the primary pulley 7 to the secondary pulley 9.

Then, in a high mode in which the low clutch C_{L} is disconnected and the high clutch C_{H} is connected since power transmission to the planetary gear 19 through the power transmission unit 26 is shut off, the planetary gear 19 is rotated integrally with the high clutch C_{H} by being engaged therewith. Consequently, the rotation of the input shaft 3 is entirely transmitted to the output shaft 5 through the belt type CVT unit 11 and the high clutch C_{H}. That is, the CVT unit 11 transmits power from the primary pulley 7 to the secondary pulley 9. Further, the rotation of the output shaft 5 is transmitted to the differential gear unit 25 through the output gear 21 and speed reduction gear unit 23 and further transmitted to the right and left front wheels through the right and left axle shafts 6a, 6b.

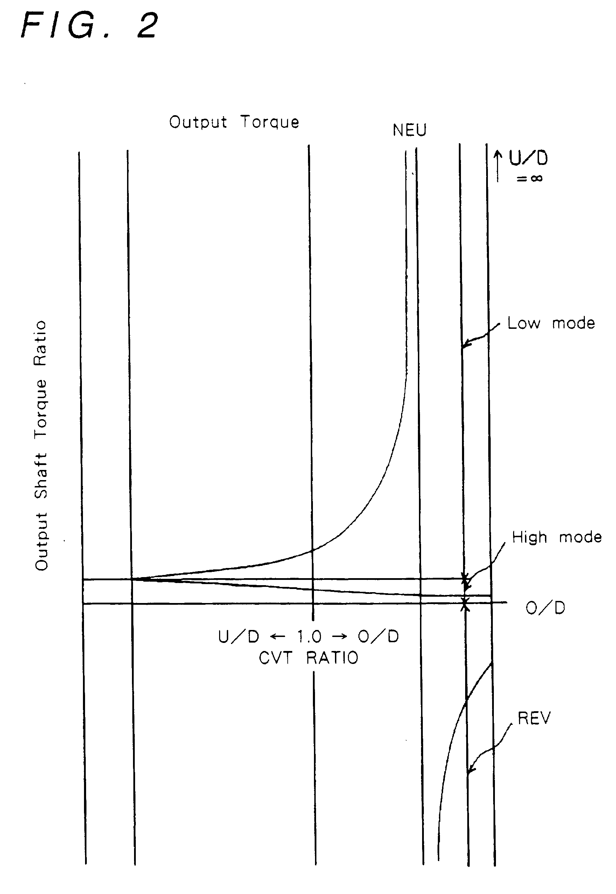

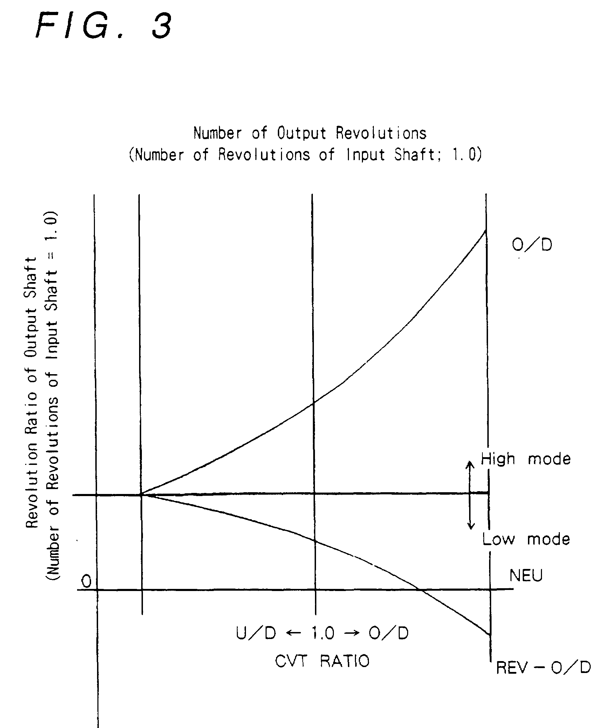

As shown in the graph of a speed of FIG. 1(b), the graph of output torque of FIG. 2 and the graph of output r.p.m. of FIG. 3, since the sun gear 19s is at its maximum rotation when the belt type CVT unit 11 is at the limit (O/D end) in a speed increasing direction (at the position a in the graph of FIG. 1) in the low mode, the ring gear 19r is rotated in a reverse direction with respect to the carrier 19c having a constant r.p.m. and the reverse rotation (REV) is transmitted to the output shaft 5. When the CVT unit 11 is shifted in a speed reducing (U/D) direction, the r.p.m. of the reverse rotation is reduced, so that a neutral position (NEU) where the r.p.m. of the output shaft 5 is made zero is reached at a predetermined pulley ratio determined by the gear ratio of the planetary gear 19 and the power transmission unit 26. When the CVT unit 11 is further shifted in the speed reducing direction, since the ring gear 19r is switched to a forward rotating direction, the forward rotation, i.e. the rotation in a forward traveling direction is transmitted to the output shaft 5. At the time, as apparent from FIG. 2, the torque of the second shaft 5 diverges indefinitely in the vicinity of the above neutral position NEU.

Next, when the CVT unit 11 reaches the end of the speed reducing direction (U/D), the high clutch C_{H} is connected and an operation mode is switched to the high mode. In the high mode, since the rotation output from the CVT unit 11 is transmitted to the output shaft 5 as it is, a parallel line is obtained as shown by b in the graph of a speed of FIG. 1(b). Thereafter, as the CVT unit 11 is shifted in a speed increasing (O/D) direction, the rotation of the output shaft 5 is also shifted in the speed increasing direction and an amount of transmitted torque is reduced accordingly. Note, λ in FIG. 1(b) represents the ratio (Zs/Zr) of the number of teeth Zs of the sun gear to the number of teeth of the ring gear Zr.

Next, an embodiment of a hydraulic control mechanism of the continuously variable transmission according to the present invention will be described.

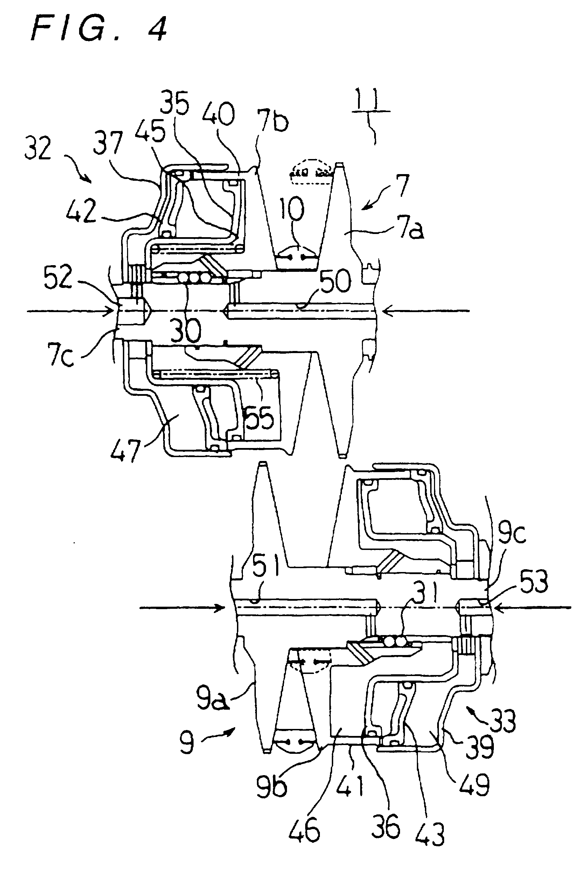

In the primary and secondary pulleys 7, 9, the movable sheaves 7b, 9b are axially movably supported by the bosses 7c, 9c of the fixed sheaves 7a. 9a through ball splines 30, 31 and hydraulic servos 32, 33 are disposed on the back surfaces of these movable sheaves 9b, 9b and constitute the axial force actuating means for applying axial forces to the pulleys, respectively, as shown in FIG. 4. Both of the hydraulic servos 32, 33 have partition members 35, 36 fixed to the bosses 7c, 9c of the fixed sheaves, cylinder members 37, 39, drum members 40, 41 fixed to the back surfaces of the movable sheaves 7b, 9b and second piston members 42, 43. The partition members 35, 36 are engaged with the drum members 40, 41 in an oil tight state as well as the second piston members 42, 43 are engaged with the cylinder members 37, 39 and the partition members 35, 36 in an oil tight state to thereby constitute a double piston structure composed of first hydraulic chambers 45, 46 and second hydraulic chambers 47, 49, respectively.

The first hydraulic chambers 45, 46 in the above hydraulic servos 32, 33 form piston surfaces on the back surfaces of the movable sheaves 7b, 9b, respectively and the piston surfaces have the same effective pressure-receiving areas on the primary side and the secondary side. Further, oil passages 50, 51, 52, 53 are defined to the bosses 7c, 9c of the fixed sheaves 7a, 9a on the primary side and secondary side and communicate with the first hydraulic chambers 45, 46 and second hydraulic chambers 47, 49, respectively. In addition, a preloading spring 55 is contractedly disposed to the first hydraulic chamber 45 of the primary side hydraulic servo 32.

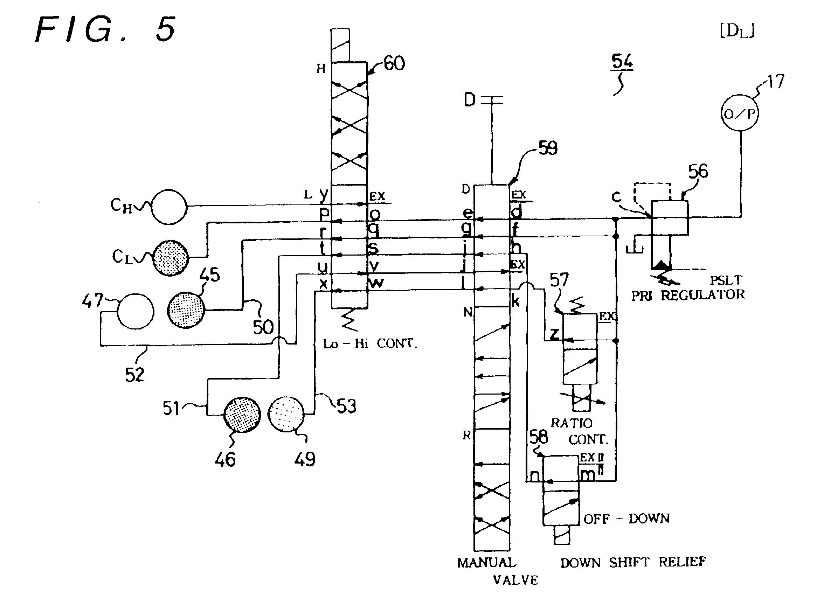

As shown in FIG. 5, the hydraulic control mechanism (means) 54 of this embodiment has a primary regulator valve 56, a ratio control valve 57, a down-shift relief valve 58, a manual valve 59 and a low/high control valve (Low-High shifting means, Low-High shifting valve) 60. Thus, the hydraulic pressure from the oil pump 17 is properly regulated as well as switched and supplied to the first and second hydraulic chambers 45, 46, 47, 49 of the above hydraulic servos 32. 33, the low clutch (hydraulic servo) C_{L} and high clutch (hydraulic servo) C_{H}.

Next, operation of the above hydraulic control mechanism 54 will be described with reference to FIG. 4 to FIG. 8.

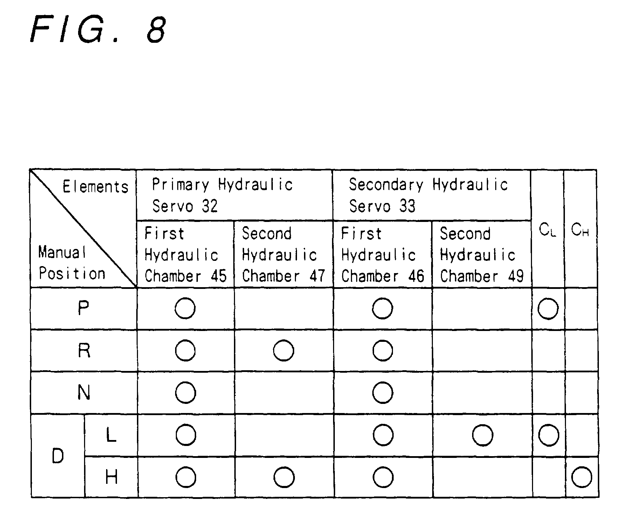

As shown in FIG. 8, when the low (L) mode is employed in a D range, a predetermined hydraulic pressure is supplied to the hydraulic chamber 45 of the primary side hydraulic servo 32 as well as a predetermined hydraulic pressure acts on both the first hydraulic chamber 46 and second hydraulic chamber 49 of the secondary side hydraulic servo 33 and further a hydraulic pressure acts on the low clutch C_{L} to connect it. That is, in the low mode, the manual valve 59 is actuated to the position of the D range shown in FIG. 5 so as to cause a port d to communicate with a port e, a port f with a port g, a port h with a port i and a port k with a port l as well as a port j with a drain port Ex. Further, the low/high control valve 60 is located at a low (L) position and switched and maintained to cause a port o to communicate with a port p, a port q with a port r, a port s with a port t, a port u with a port v and a port w with a port x as well as a port y with the drain port Ex.

Therefore, the hydraulic pressure from the output port c of the primary regulator valve 56 is supplied to the low clutch hydraulic servo C_{L} through the ports d and e in the manual valve 59 located at the position of the D range (refer to FIG. 5) and further the ports o and p of the low/high control valve 60 and causes the clutch CL to be engaged. In addition, the above hydraulic pressure is supplied to the first hydraulic chamber 45 of the primary hydraulic servo 32 through the ports f and g of the manual valve and further the ports q and r of the low/high control valve 60. In a state other than down shift operation, the down-shift relief valve 58 is located at a normal position where the port m communicates with the port n and the hydraulic pressure from the above output port c is supplied to the first hydraulic chamber 46 of the secondary hydraulic servo 33 through the ports m and n, the ports h and i of the manual valve 59 and the ports s and t of the low/high control valve 60. The hydraulic pressure from the above output port c is properly regulated by the ratio control valve 57 so that it becomes a hydraulic pressure corresponding to a target pulley ratio and the hydraulic pressure from the output port z is supplied to the second hydraulic chamber 49 of the hydraulic servo 33 through the ports k and l of the manual valve 59 and the ports w and x of the low/high control valve 60. Note, in this state, the high clutch hydraulic servo C_{H} is caused to communicate with the drain port Ex from the port y of the low/high control valve 60 and in a released state. Further, the second hydraulic chamber 47 of the primary hydraulic servo 32 communicates with the drain port Ex through the ports u and v of the low/high control valve 60 and the port j of the manual valve 59.

With this operation, the low clutch C_{L} is connected as well as the axial force caused by the secondary side hydraulic servo 33 in which a hydraulic pressure acts on both the first and second hydraulic chambers 46, 49 is made higher than the axial force caused by the primary side hydraulic servo 32 in which a hydraulic pressure acts on only the first hydraulic chamber 45 in the CVT unit 11. Thus, the opening/closing of the above ratio control valve 57 is properly adjusted in the state of the axial forces of both the pulleys 9, 7 corresponding to the torque transmitted from the secondary pulley 9 to the primary pulley 7. With this operation, the hydraulic pressure of the second hydraulic chamber 49 of the secondary hydraulic servo 33 is regulated to thereby properly adjust the axial force caused by the hydraulic servo 33, so that a pulley ratio (torque ratio) is properly changed. In this state, the engine torque which is transmitted from the input shaft 3 to the carrier 19c of the planetary gear 19 through the low clutch C_{L} and power transmission unit 26 is taken out from the output shaft 5 through the ring gear 19r while being regulated by the CVT unit 11 through the sun gear 19s based on the above predetermined pulley ratio.

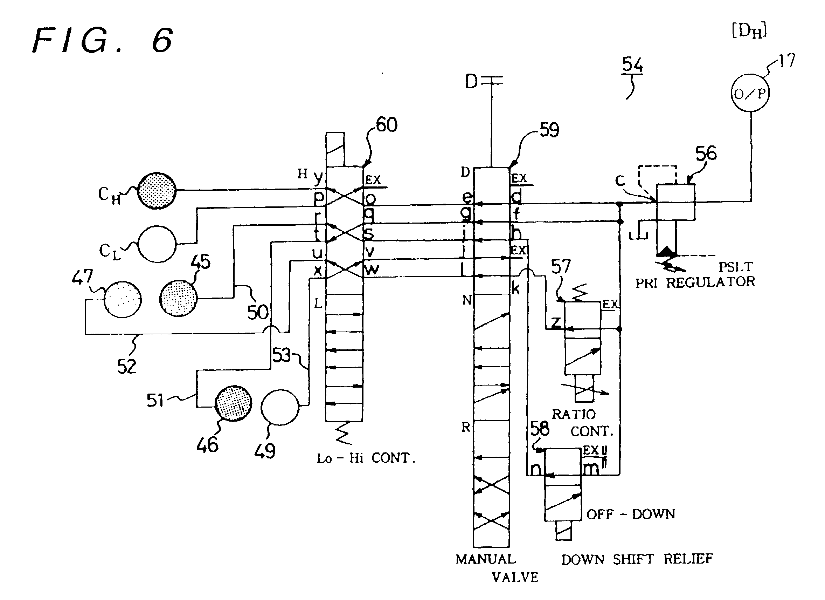

In the high (H) mode in the D range, a predetermined hydraulic pressure is supplied to the first and second hydraulic chambers 45, 47 of the primary side hydraulic servo 32 as well as to the first hydraulic chamber 46 of the secondary side hydraulic servo 33 and further to the high clutch hydraulic servo C_{H} as shown in FIG. 8. That is, in the high (H) mode, although the manual valve 59 is located at the D range position likewise the above low mode, since the low/high control valve 60 is switched to the high position (H), the port o communicates with the port y, the port q with the port t, the port s with the port r, the port x with the port v and the port w with the port u, respectively and the port p communicates with the drain port Ex as shown in FIG. 6.

Therefore, the hydraulic pressure output from the primary regulator valve 56 is supplied to the high clutch hydraulic servo C_{H} through the ports d and e of the manual valve 59 and the ports o and y of the low/high control valve 60 to thereby cause the clutch C_{H} to engage. Further, the above hydraulic pressure is supplied to the first hydraulic chamber 46 of the secondary hydraulic servo 33 through the ports f and g of the manual valve 59 and the ports q and t of the low/high control valve 60. In addition, the hydraulic pressure is supplied to the first hydraulic chamber 45 of the primary hydraulic servo 32 through the ports m and n of the down-shift relief valve 58, the ports h and i of the manual valve 59 and the ports s and r of the low/high control valve 60 and to the second hydraulic chamber 47 of the primary hydraulic servo 32 through the output port z of the ratio control valve 57 in which the hydraulic pressure is properly regulated, the ports k and l of the manual valve 59 and the ports w and u of the low/high control valve 60. Note, the low clutch hydraulic servo C_{L} is released by being caused to communicate with the drain port Ex from the port p of the low/high control valve 60 in this state. Further, the second hydraulic chamber 49 of the secondary hydraulic servo 33 communicates with the drain port Ex through the ports x and v of the low/high control valve 60 and the port j of the manual valve 59.

With this operation, the high clutch C_{H} is connected as well as the axial force caused by the primary side hydraulic servo 32 in which a hydraulic pressure is supplied to the first and second hydraulic chambers 45, 47 is made higher than the axial force caused by the secondary side hydraulic servo 33 in which a hydraulic pressure is supplied only to the first hydraulic chamber 46 in the CVT unit 11. Thus, above ratio control valve 57 is properly adjusted in the state of the axial force corresponding to the torque transmitted from the primary pulley 7 to the secondary pulley 9. With this operation, the hydraulic pressure of the second hydraulic chamber 47 of the primary hydraulic servo 32 is regulated to thereby adjust the axial force caused by the primary hydraulic servo 32, so that a proper pulley ratio (torque ratio) can be obtained. In this state, the torque transmitted from an engine to the input shaft 3 is properly changed by the CVT unit 11 by being transmitted from the primary pulley 7 to the secondary pulley 9 and further taken out from the output shaft 5 through the high clutch C_{H}.

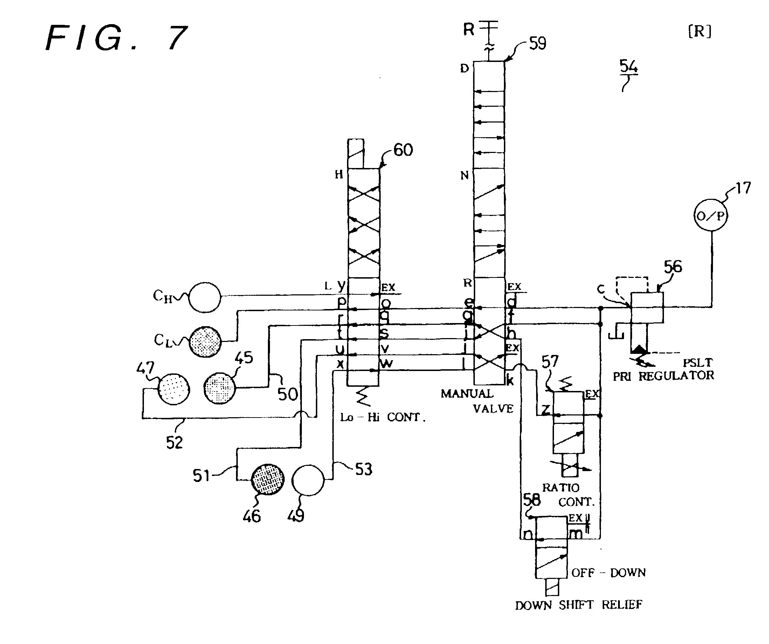

In a reverse range (R), a predetermined hydraulic pressure is supplied to the first and second hydraulic chambers 45, 57 of the primary side hydraulic servo 32 as well as to the first hydraulic chamber 46 of the secondary side hydraulic servo 33 and further to the low clutch hydraulic servo C_{L} as shown in FIG. 8. That is, in the reverse range, the manual valve 59 is located at a reverse (R) range position and the low/high control valve 60 is located at the low position (L) as shown in FIG. 7. In this state, the port d communicates with the port e, the port f with the port i and the port k with the port j, respectively in the manual valve 59 and the port 1 communicates with the drain port Ex. Further, the port o communicates with the port p, the port q with the port r, the port s with the port t, the port v with the port u and the port x with the port w, respectively in the low/high control valve 60 likewise the aforethe low (L) mode and the port y communicates with the drain port Ex.

Therefore, the hydraulic pressure from the output port c of the primary regulator valve 56 is supplied to the low clutch hydraulic servo C_{L} through the ports d and e of the manual valve 59 and the ports o and p of the low/high control valve 60 and further to the first hydraulic chamber 46 of the secondary hydraulic servo 33 through the ports f and i of the manual valve 59 and the ports s and t of the low/high control valve 60. Further, the above hydraulic pressure is supplied to the first hydraulic chamber 45 of the primary hydraulic servo 32 through the ports m and n of the down-shift relief valve 58, the ports h and g of the manual valve 59 and the ports q and r of the low/high control valve 60. In addition, the hydraulic pressure is properly regulated by the ratio control valve 57 and supplied from the output port z thereof to the second hydraulic chamber 47 of the primary hydraulic servo 32 through the ports k and j of the manual valve 59 and the ports v and u of the low/high control valve 60.

With this operation, the low clutch C_{L} is connected as well as the axial force caused by the primary side hydraulic servo 32 in which a hydraulic pressure acts on the first and second hydraulic chambers 45, 47 is made higher than the axial force caused by the secondary side hydraulic servo 33 in which a hydraulic pressure acts only on the first hydraulic chamber 46 in the CVT unit 11. Thus, the state of an axial force corresponding to the torque transmitted from the primary pulley 7 to the secondary pulley 9 is achieved as well as the hydraulic pressure in the second hydraulic chamber 47 of the primary hydraulic servo 32 is regulated by the adjustment of the ratio control valve 57 to thereby adjust the axial force caused by the hydraulic servo 32, so that a proper pulley ratio can be obtained. In this state. since the pulley ratio of the CVT unit 11 is in a predetermined speed increasing (O/D) state, the engine torque from the input shaft 3 is transmitted to the carrier 19c of the planetary gear 19 through the low clutch C_{L} and power transmission unit 26 as well as to the sun gear 19s through the CVT unit 11 which transmits torque from the primary pulley 7 to the secondary pulley 9, thus the both of the torque are synthesized by the planetary gear 19 and taken out from the output shaft 5 through the ring gear 19r as a reverse rotation.

In a parking position P and neutral position N of the manual valve 59, both the low clutch C_{L} and high clutch C_{H} are released as well as a predetermined hydraulic pressure is supplied to the first hydraulic chambers 45, 46 of the primary side and secondary side hydraulic servos 32, 33 as shown in FIG. 8. That is, the port f communicates with the port g, the port h with the port i in the manual valve 59 and further the ports e, j, l communicate with the drain port Ex, respectively. In addition, the low/high control valve 60 is kept at the aforesaid low position L.

Therefore, the hydraulic pressure output from the primary regulator valve 56 is supplied to the first hydraulic chamber 45 of the primary hydraulic servo 32 through the ports f and g of the manual valve 59 and the ports q and r of the low/high control valve 60 as well as to the first hydraulic chamber 46 of the secondary hydraulic servo 33 through the ports m and n of the down-shift relief valve 58, the ports h and i of the manual valve 59 and the ports s and t of the low/high control valve 60. Further, the hydraulic pressure of the high clutch hydraulic servo C_{H} is released through the port y of the low/high control valve 60 and the drain port Ex, the hydraulic pressure of the low clutch hydraulic servo C_{L} is released through the ports p and o of the low/high control valve 60, the port e of the manual valve 59 and the drain port Ex, the hydraulic pressure of the second hydraulic chamber 47 of the primary hydraulic servo 32 is released through the ports u and v of the low/high control valve 60. the port j of the manual valve 59 and the drain port Ex, and the hydraulic pressure of the second hydraulic chamber 49 of the second hydraulic servo 33 is released through the ports x and w of the low/high control valve 60, the port l of the manual valve 59 and the drain port Ex.

With this operation, since both of the low clutch C_{L} and high clutch C_{H} are released and the same hydraulic pressure acts only on the first hydraulic chambers 45, 46 of the primary hydraulic servo 32 and secondary hydraulic servo 33, approximately the same axial force acts on both the primary and secondary pulleys 7, 9.

Note, since a predetermined hydraulic pressure is supplied from the primary regulator valve 56 to the first hydraulic chambers 45, 46 of both the primary and secondary hydraulic servos 32, 33, respectively in the aforesaid respective positions D, N and R and the low (L) mode and high (H) mode, a predetermined axial force corresponding to the transmitted torque is secured so that a belt does not slip. Further, since the regulated hydraulic pressure from the ratio control valve 57 is supplied to the second hydraulic chamber 47 or 49 of any one of the above hydraulic servos 32, 33, the ratio of the axial forces of both the pulleys 7, 9 is adjusted so that a speed changing operation is executed so as to obtain a predetermined pulley ratio.

Further, when down-shift is effected in a coast state, the down-shift relief valve 58 is switched to cause the port n to communicate with the drain port Ex. With this operation, the hydraulic pressure supplied to the first hydraulic chamber 45 or 46 of both the hydraulic servos 32. 33 as described above is discharged through predetermined ports, the port n of the relief valve 58 and the drain port Ex and the hydraulic pressure in the hydraulic servo on which a high hydraulic pressure acts is made lower than the hydraulic pressure of the hydraulic servo on which a low hydraulic pressure acts.

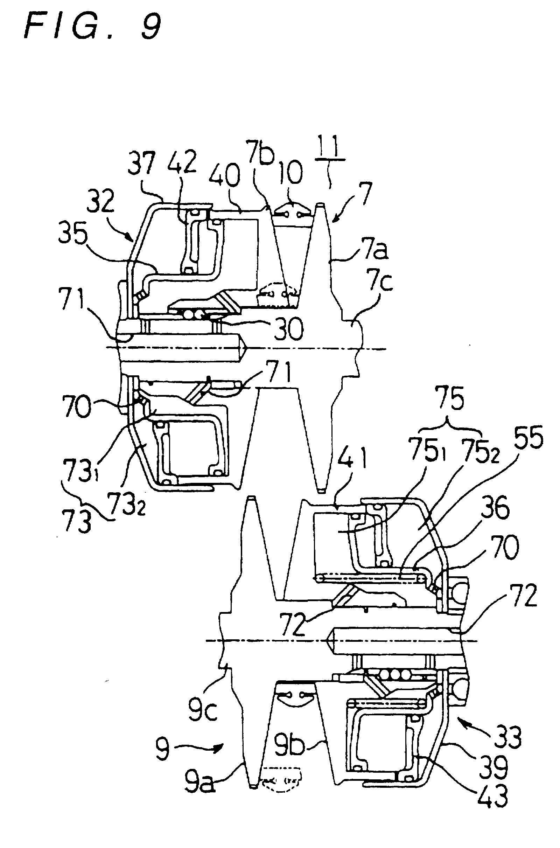

Next, the control mechanism according to another embodiment will be described with reference to FIG. 9 to FIG. 13.

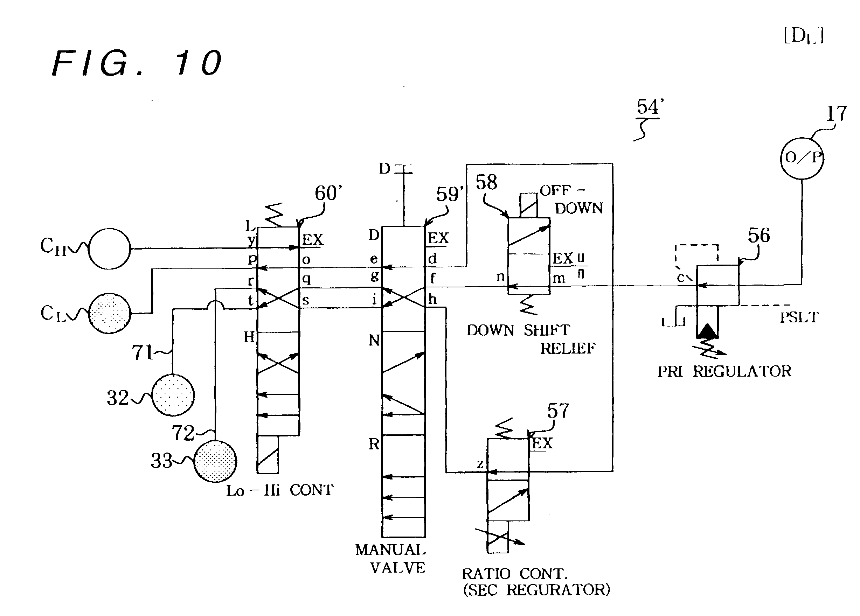

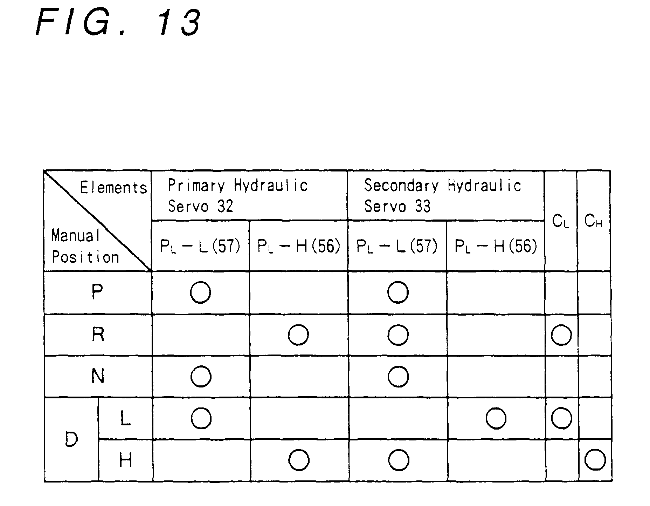

Although primary and secondary side hydraulic servos 32, 33 of this embodiment shown in FIG. 9 have first and second hydraulic chambers 73₁, 75₁, 73₂, 75₂, respectively likewise those shown in FIG. 4, holes 70, 70 are defined to the partition members 35. 36 so as to simply increase pressure receiving areas. Thus, this embodiment constitutes a hydraulic actuator composed of substantially each one of hydraulic chambers 73, 75 which are supplied with hydraulic pressures from oil passages 71, 72, respectively and the hydraulic chambers 73, 75 of both the hydraulic servos 32, 33 have the same pressure-receiving areas. Further, a preloading spring 55 is contractedly disposed to the first hydraulic chamber 75₁ of the secondary side hydraulic servo 33. As shown in FIG. 10 to FIG. 12. the control mechanism 54' has a primary regulator valve 56. a ratio control valve 57 constituting a secondary regulator valve and a down-shift relief valve 58 which are continuously disposed in series from an oil pump 17 and further a manual valve 59' and a low/high control valve 60' each having an oil passage structure different from that of the above embodiment. The control mechanism 54' operates as shown in the operation table of FIG. 13.

In the low (L) mode in the D range, a relatively low line pressure (P_{L} - L) is supplied to the hydraulic chamber 73 of the primary hydraulic servo 32 from the ratio control valve 57, a relatively high line pressure (P_{L} - H) is supplied to the hydraulic chamber 75 of the secondary hydraulic servo 33 from the primary regulator valve 56 and a line pressure is supplied to a low clutch hydraulic servo C_{L}, as shown in FIG. 13. That is, since the manual valve 59' is located at the D position, a port d communicates with a port e, a port f with a port i and a port h with a port g, and since the low/high control valve 60' is located at the low (L) position, a port o communicates with a port p, a port q with a port t and a port s with a port r as well as a port y communicates with a drain port Ex, as shown in FIG. 10.

Therefore, the relatively high line pressure (P_{L} - H) regulated by the primary regulator valve 56 is supplied to the low clutch hydraulic servo C_{L} through the ports d and e of the manual valve 59' and the ports o and p of the low/high control valve 60' and further to the secondary hydraulic servo 33 through the ports m and n of the down-shift relief valve 58. the ports f and i of the manual valve 59' and the ports s and r of the low/high control valve 60'. Further, the pressure output from the primary regulator valve 56 is further properly regulated by the ratio control valve (secondary regulator valve) 57 and the resulting regulated relatively low line pressure (P_{L} - L) is supplied from the output port z thereof to the primary hydraulic servo 32 through the ports h and g of the manual valve 59' and the ports q and t of the low/high control valve 60'. Note, the hydraulic pressure of a high clutch hydraulic servo C_{H} is released through the port y and drain port Ex.

With this operation, a low clutch C_{L} is connected as well as the axial force of a secondary pulley 9 caused by the secondary hydraulic servo 33 on which the relatively high line pressure P_{L} - H acts is made higher than the axial force of a primary pulley 7 caused by the primary hydraulic servo 32 on which the relatively low line pressure P_{L} - L acts in a CVT unit 11. This state corresponds to the low (L) mode in the D range where torque is transmitted from the secondary pulley 9 to the primary pulley 7 as well as the axial force of the primary pulley 7 is adjusted by the proper pressure regulation effected by the ratio control valve 57 so that a pulley ratio (torque ratio) is properly changed.

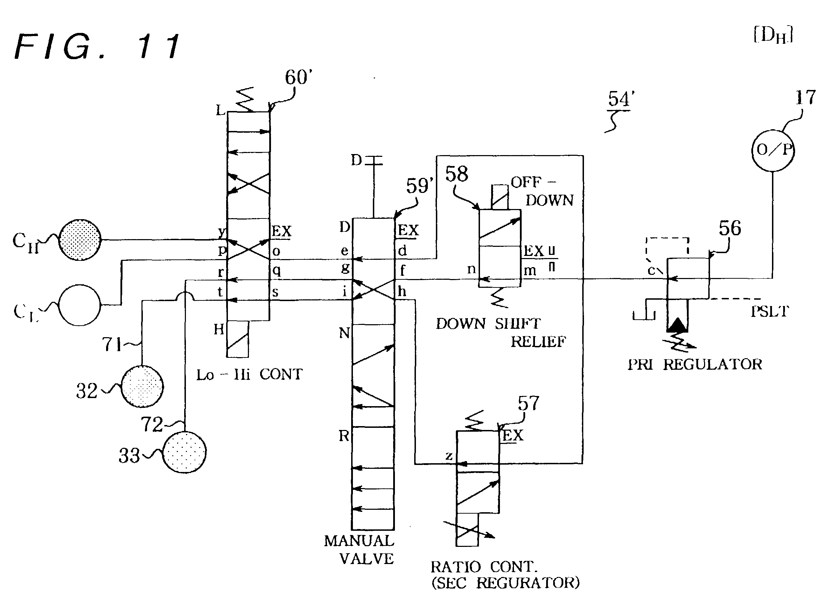

Further, in the high (H) mode in the D range, the relatively high line pressure P_{L} - H is supplied to the primary hydraulic servo 32 as well as the relatively low line pressure P_{L} - L is supplied to the secondary hydraulic servo 33 and the line pressure is supplied to the high clutch hydraulic servo C_{H} as shown in FIG. 13. That is, although the manual valve 59' is maintained at the D range position likewise the above case, since the low/high control valve 60' is switched to a high (H) position, the port o communicates with the port y and the port q with the port r and the port s with the port t, respectively, and further the port p communicates with the drain port Ex, as shown in FIG. 11.

Therefore, the relatively high regulated pressure (line pressure) P_{L} - H from the primary regulator valve 56 is supplied to the high clutch hydraulic servo C_{H} through the ports d and e of the manual valve 59' and the ports o and y of the low/high control valve 60' and further to the primary hydraulic servo 32 through the ports m and n of the down-shift relief valve 58, the ports f and i of the manual valve 59' and the ports s and t of the low/high control valve 60'. On the other hand, the relatively low regulated pressure (line pressure) P_{L} - L obtained by further regulating the pressure output from the primary regulator valve 56 is supplied from the output port z thereof to the secondary hydraulic servo 33 through the ports h and g of the manual valve 59' and the ports q and r of the low/high control valve 60'. Note, the hydraulic pressure of the low clutch hydraulic servo C_{L} is released through the port p and drain port Ex.

With this operation, the high clutch C_{H} is connected as well as the axial force of the primary pulley 7 caused by the primary hydraulic servo 32 on which the relatively high line pressure P_{L} - H acts is made higher than the axial force of the secondary pulley 9 caused by the secondary hydraulic servo 33 on which the relatively low line pressure P_{L} - L acts in the CVT unit 11. This state corresponds to the high (L) mode where torque is transmitted from the primary pulley 7 to the secondary pulley 9 as well as the axial force of the secondary pulley 9 is adjusted by the proper pressure regulation effected by the ratio control valve 57 so that the pulley ratio (torque ratio) is properly changed.

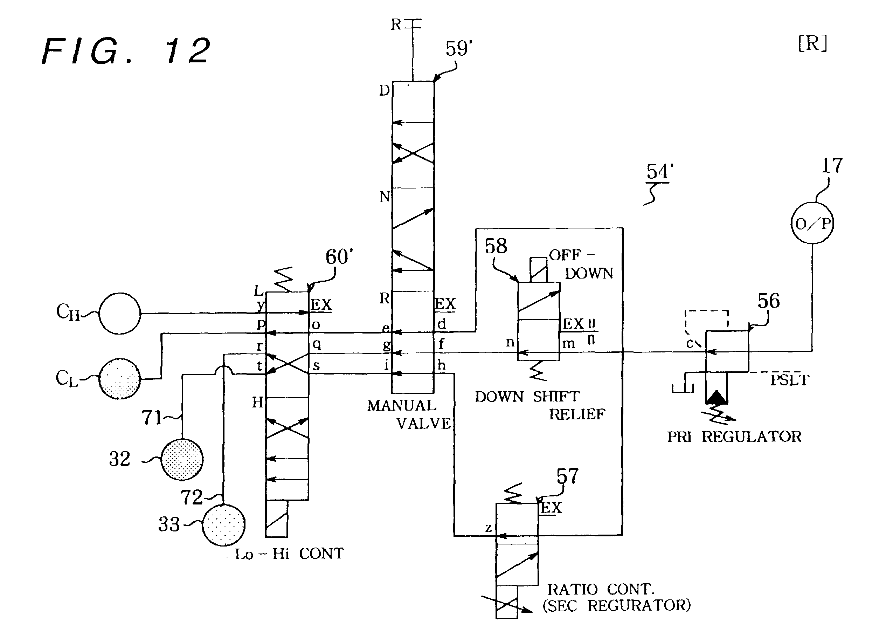

In the reverse range (R), the relatively high line pressure P_{L} - H acts on the primary hydraulic servo 32 and the relatively low line pressure P_{L} - L acts on the secondary hydraulic servo 33 as well as the line pressure acts on the low clutch hydraulic servo C_{L} as shown in FIG. 13. That is, the manual valve 59 is switched to a reverse (R) range position, the port d communicates with the port e, the port f with the port g and the port h with the port i and further the low/high control valve 60' is maintained at the aforesaid low (L) position, as shown in FIG. 12.

Therefore, the relatively high regulated pressure (line pressure) P_{L} - H from the primary regulator valve 56 is supplied to the low clutch hydraulic servo C_{L} through the ports d and e of the manual valve 59' and the ports o and p of the low/high control valve 60' as well as to the primary hydraulic servo 32 through the ports m and n of the down-shift relief valve 58. the ports f and g of the manual valve 59' and the ports q and t of the low/high control valve 60'. On the other hand, the relatively low regulated pressure (line pressure) P_{L} - L from the ratio control valve 57 is supplied to the secondary hydraulic servo 33 through the port h and i of the manual valve 59' and the ports s and r of the low/high control valve 60'. Note, the hydraulic pressure of the high clutch hydraulic servo C_{H} is discharged from the port y to the drain port Ex.

With this operation, the low clutch C_{L} is connected as well as the relatively high hydraulic pressure P_{L} - H based on the primary regulator valve 56 acts on the primary hydraulic servo 32 and the relatively low hydraulic pressure P_{L} - L based on the ratio control valve 57 acts on the secondary hydraulic servo 33 in the CVT unit 11. In the reverse (R) range, although torque is transmitted from the primary pulley 7 to the secondary pulley 9 in the CVT unit 11, the axial force of the primary pulley 7 is made higher than that of the secondary pulley 9 in correspondence with the torque transmission as well as the axial force of the secondary pulley 9 is adjusted by the pressure regulation effected by the ratio control valve 57 so that the pulley ratio is properly changed.

Further, in the neutral (N) range and parking (P) range, the relatively low hydraulic pressure P_{L} - L acts on the primary hydraulic servo 32 as well as the relatively low hydraulic pressure P_{L} - L acts on the secondary hydraulic servo 33 as shown in FIG. 13. That is, since the manual valve 59' is switched to the neutral or parking position, the port e communicates with the drain port Ex as well as the port h communicates with the ports g and i and the low/high control valve 60' is maintained at the aforesaid low (L) position.

Therefore, the hydraulic pressure from the output port z of the ratio control valve 57 is supplied from the port h of the manual valve 59' to the primary hydraulic servo 32 through the port g and the ports q and t of the low/high control valve 60' as well as to the secondary hydraulic servo 33 through the port i and the ports s and r of the low/high control valve 60'. Further, the hydraulic pressure of the high clutch hydraulic servo C_{H} is discharged from the port y of the low/high control valve 60' to the drain port Ex and the hydraulic pressure of the low clutch hydraulic servo C_{L} is discharged through the ports p and o of the low/high control valve 60', the port e of the manual valve 59' and the drain port Ex in this state.

With this operation, both the low and high clutches C_{L}, C_{H} are shut off as well as the same hydraulic pressure acts on the primary hydraulic servo 32 and secondary hydraulic servo 33 having the same pressure-receiving areas from the ratio control valve 57 so that approximately the same axial forces act on both the primary and secondary pulleys 7, 9.

Note, when down-shift operation is executed, the down-shift relief valve 58 is switched to cause the port n to communicate with the drain port Ex, thus the hydraulic pressure of the hydraulic servo on which a high hydraulic pressure acts is made lower than the hydraulic pressure of the hydraulic servo on which a low hydraulic pressure acts.

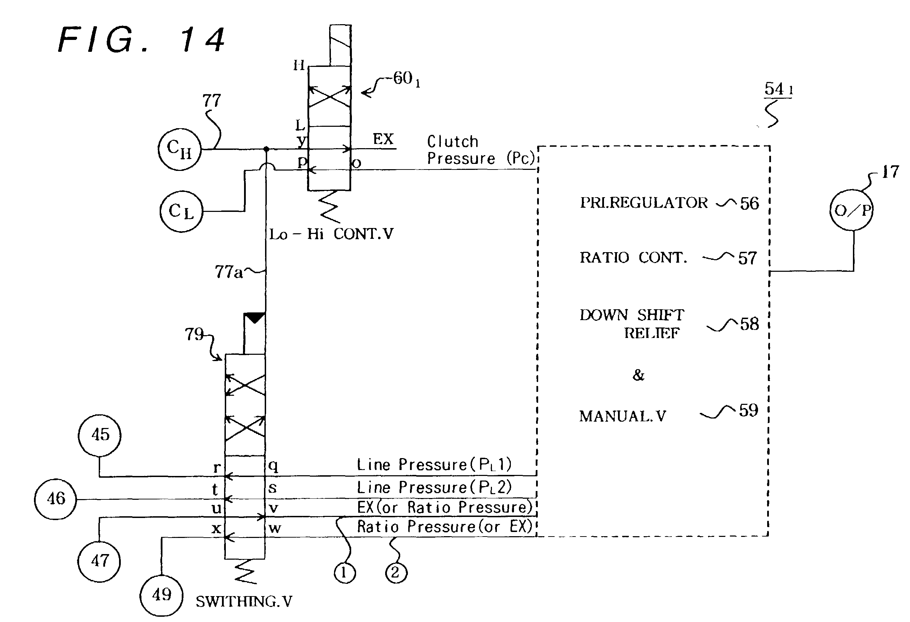

Next, a partially modified control mechanism will be described with reference to FIG. 14. The control mechanism 541 is applied to a so-called double chamber type control mechanism having the primary and secondary hydraulic servos 32, 33 shown in FIG 4, that is, the first and second hydraulic chambers 45, 46, 47, 49. Note. although a primary regulator valve 56, a ratio control valve 57, a down-shift relief valve 58 and a manual valve 59 are used which are similar to those of the embodiments shown in FIG. 5 to FIG. 7, a low/high control valve 601 is composed of a simple 2-position-switching solenoid valve with 4 ports. Then, a pilot oil passage 77a is branched from an oil passage 77 from the port y of the low/high control valve 601 to a high clutch servo C_{H} and there is provided a switching valve 79 which is switched by a pilot pressure.

In the low (L) mode in the D range, since the low/high control valve 601 is located at a low position, a port o communicates with a port p and a port y with a drain port Ex. Further, since the switching valve 79 is located at the illustrated position in the state that the oil passage 77 communicates with the drain port Ex, a port q with a port r, a port s with a port t, a port u with a port v and a port w with a port x. Note. the manual valve 59 is arranged in the D range position such that the ratio pressure from the ratio control valve 57 is introduced to an oil passage (2) and an oil passage (1) communicates with the drain port Ex.

Therefore, the clutch pressure Pc from the manual valve 59 is supplied to a low clutch hydraulic servo C_{L} through the ports o and p of the low/high control valve 601 and the first and second line pressures P_{L}1, P_{L}2 from the manual valve are supplied to the first hydraulic chamber 45 of the primary hydraulic servo 32 and the first hydraulic chamber 46 of the secondary hydraulic servo 33 through the ports q, r, s, t of the switching valve 79. Further, the ratio pressure from the manual valve is supplied to the second hydraulic chamber 49 of the secondary hydraulic servo 33 through the oil passage (2) and the ports w and x of the switching valve 79 and the hydraulic pressure of the second hydraulic chamber 47 of the primary hydraulic servo 32 communicates with the drain port Ex of the manual valve through the ports u and v and the oil passage (1).

In this state, the low clutch C_{L} is connected as well as the axial force of the secondary pulley 9 is made higher than that of the primary pulley 7 by the ratio pressure acting on the second hydraulic chamber 49 of the secondary hydraulic servo 33 in accordance with the direction in which torque is transmitted in the CVT unit 11 likewise the above-mentioned.

Further, in the high (H) mode in the D range, since the low/high control valve 60₁ is switched to the high (H) position, the port o communicates with the port y as well as the port p with the drain port Ex. Since the switching valve 79 is switched by the pilot pressure from the oil passage 77a in the state that the clutch pressure Pc is supplied to the oil passage 77 through the ports o and y, the port q communicates with the port t, the port s with the port r, the port x with the port v and the port w with the port u.

Therefore, the clutch pressure Pc is supplied to the high clutch hydraulic servo C_{H} through the ports o and y of the low/high control valve 60₁ and the line pressures P_{L}1 and P_{L}2 are supplied to the first hydraulic chamber 46 of the secondary hydraulic servo 33 through the ports q and t of the switching valve 79 as well as to the first hydraulic chamber 45 of the primary hydraulic servo 32 through the ports s and r. Further, the ratio pressure from the manual valve 59 is supplied to the second hydraulic chamber 47 of the primary hydraulic servo 32 through the oil passage (2) and the ports w and u and the hydraulic pressure of the second hydraulic chamber 49 of the secondary hydraulic servo 33 is discharged from the drain port of the manual valve 59 through the ports x and v and oil passage (1).

In this state, the high clutch C_{H} is connected as well as the axial force of the primary pulley 7 caused by the primary hydraulic servo 32 in which the ratio pressure acts on the second hydraulic chamber 47 is made higher than that of the secondary pulley 9 in accordance with the direction in which torque is transmitted in the CVT unit 11.

In the reverse (R) range, the manual valve 59 is switched and the low/high control valve 60₁ is maintained at the low (L) position as shown in FIG. 7. Therefore, the switching valve 79 is maintained at a lower position in the drawing in this state likewise the above-mentioned. Further, the ratio pressure is supplied to the oil passage (1) by switching the switching valve 79 as well as the oil passage (2) communicates with the drain port Ex.

Therefore, the clutch pressure Pc is supplied to the low clutch hydraulic servo C_{L} through the ports o and p and the first and second line pressures are supplied to the first hydraulic chamber 5 of the primary hydraulic servo through the ports q and r as well as to the first hydraulic chamber 46 of the secondary hydraulic servo through the ports s and t. Further, the ratio pressure through the manual valve 59 is supplied to the second hydraulic chamber 47 of the primary hydraulic servo through the oil passage (1) and the ports v and u and the hydraulic pressure of the second hydraulic chamber of the secondary hydraulic servo is discharged from the drain port Ex of the manual valve 59 through the ports x and w and the oil passage (2).

In this state, the low clutch C_{L} is connected as well as the axial force of the primary pulley 7 caused by the primary hydraulic servo 32 in which the ratio pressure acts on the second hydraulic chamber 47 is made higher than that of the secondary pulley 9 in accordance with the direction in which torque is transmitted in the CVT unit 11.

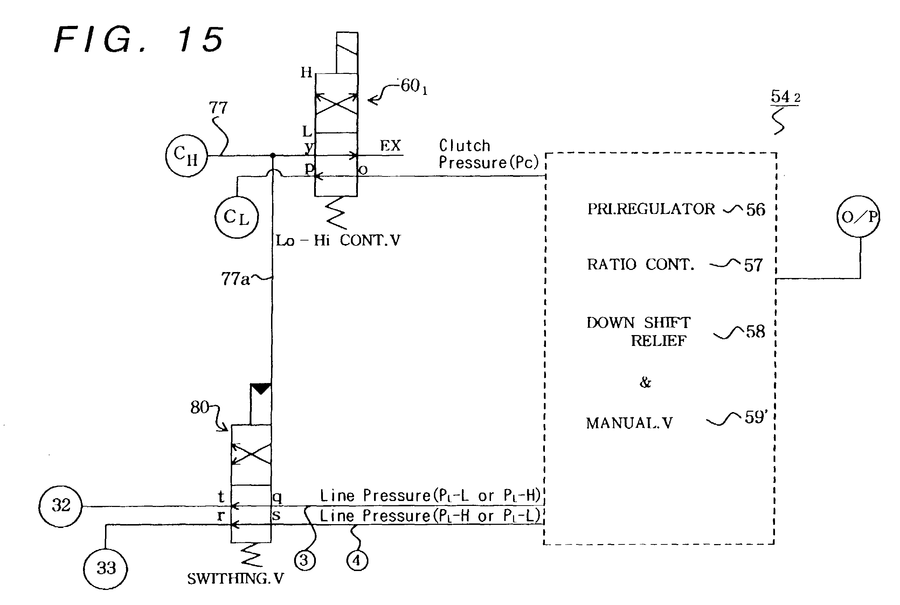

Next, another partially modified control mechanism will be described with reference to FIG. 15. The control mechanism 542 acts on a so-called double regulator type control mechanism having the primary and secondary hydraulic servos 32, 33 shown in FIG 9, that is, each one of a hydraulic chambers 73 and 75 having the same pressure-receiving areas for supplying different hydraulic pressures, respectively. Note, although a primary regulator valve 56, a ratio control valve (secondary regulator valve) 57, a down-shift relief valve 58 and a manual valve 59' are used which are similar to those of the embodiments shown in FIG. 10 to FIG. 12, a low/high control valve 60₁ is composed of a simple 2-position-switching solenoid valve with 4 ports as well as a switching valve 80 is provided which can switch a hydraulic pressure from the port y of the valve 60₁ to the high clutch hydraulic servo C_{H} as a pilot pressure.

In the low (L) mode in the D range, since the low/high control valve 60₁ is located at the low (L) position, the port o communicates with the port p nd the port y with the drain port Ex. Further, the switching valve 80 is located at a position shown in the drawing in the state that the oil passage 77 communicates with the drain port Ex, the port q with the port t and the port s with the port r. Note, since the manual valve 59' is located at the D range position at the time, the relatively high line pressure P_{L} - H from the primary regulator valve 56 is introduced to an oil passage (4) and the relatively low line pressure P_{L} - L from the ratio control valve 57 is introduced to an oil passage (3).

Therefore, the clutch pressure P_{C} from the manual valve 59' is supplied to the low clutch hydraulic servo C_{L} through the ports o and p of the low/high control valve 60₁, the relatively low line pressure P_{L} - L from the oil passage (3) is supplied to the primary hydraulic servo 32 through the ports q and t of the switching valve 80 and the relatively high line pressure P_{L} - H from the oil passage (4) is supplied to the hydraulic servo 33 through the ports s and r.

In this state, the low clutch C_{L} is connected as well as the axial force of the secondary pulley 9 caused by the hydraulic servo 33 on which a somewhat higher line pressure acts is made higher than that of the primary pulley 7 in accordance with the direction in which torque is transmitted in the CVT unit 11 likewise the above-mentioned.

Further, in the high (H) mode in the D range, since the low/high control valve 60₁ is switched to the high (H) position, the port o communicates with the port y as well as the port p with the drain port Ex. Since the switching valve 80 is switched by the pilot pressure from the oil passage 77a in the state that the clutch pressure P_{L} is supplied to the oil passage 77 through the ports o and y, the port q communicates with the port r and the port s with the port t.

Therefore, the clutch pressure P_{C} is supplied to the high clutch hydraulic servo C_{H}, the relatively low line pressure P_{L} - L from the oil passage (3) is supplied to the secondary hydraulic servo 33 through the ports q and r of the switching valve 80 and the relatively high line pressure P_{L} - H from the oil passage (4) is supplied to the primary hydraulic servo 32 through the ports s and t.

In this state, the high clutch C_{H} is connected as well as the axial force of the primary pulley 7 caused by the hydraulic servo 32 on which a somewhat high line pressure acts is made higher than that of the secondary pulley 9 in accordance with the direction in which torque is transmitted in the CVT unit 11.

In the reverse (R) range, the manual valve 59' is switched and the low/high control valve 60₁ is maintained at the low (L) position as shown in FIG. 12. Therefore, the switching valve 80 is maintained at a lower position of the drawing in this state likewise the above-mentioned. In addition, the switching of the manual valve 59' causes the relatively high line pressure P_{L} - H from the primary regulator valve 56 to be introduced to the oil passage (3) and the relatively low pressure line pressure P_{L}- L to be introduced to the oil passage (4) from the ratio control valve 57. Further, the relatively low line pressure P_{L} - L from the ratio control valve 57 is introduced to the oil passage (4). Therefore, the clutch pressure C_{L} is supplied to the low clutch hydraulic servo C_{L} through the ports o and p, the somewhat high line pressure P_{L} - H from the oil passage (3) is supplied to the primary hydraulic servo 32 through the ports q and t and the somewhat low line pressure P_{L} - L from the oil passage (4) is supplied to the secondary hydraulic servo 33 through the ports s and r.

In this state, the low clutch C_{L} is connected as well as the axial force of the primary pulley 7 caused by the hydraulic servo 32 on which a somewhat high line pressure P_{L} - H acts is made higher than that of the secondary pulley 9 in accordance with the direction in which torque is transmitted in the CVT unit 11.

Next. control of the continuously variable transmission of the embodiment will be described.

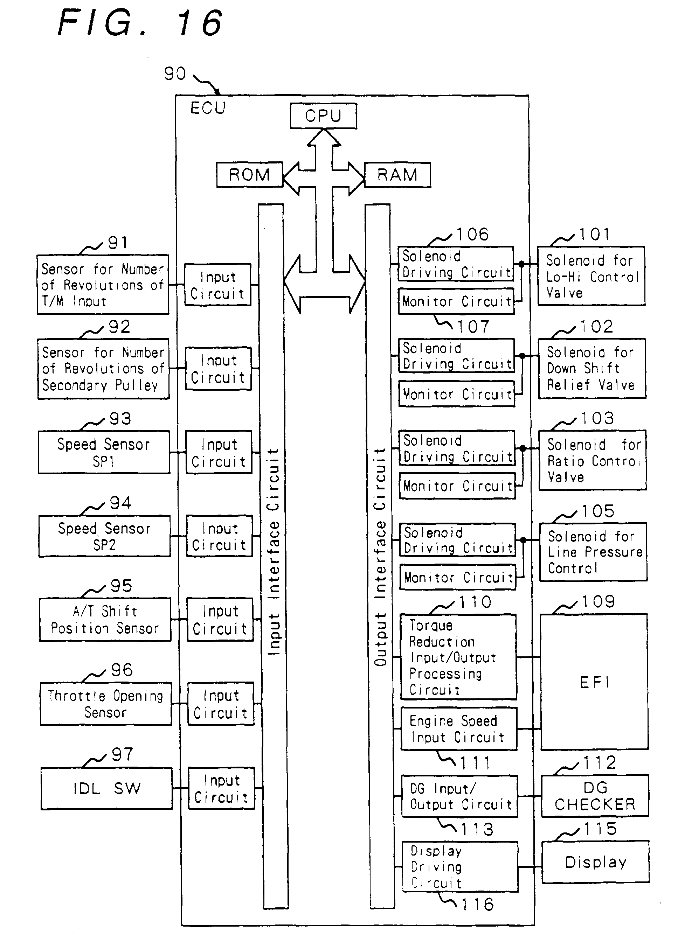

FIG. 16 is a block diagram of an electronic control unit (ECU) 90, wherein numeral 91 denotes a sensor disposed to the continuously variable transmission 1 for detecting the r.p.m. of the input shaft 2 thereof, numeral 92 denotes a sensor for detecting the r.p.m. of the secondary pulley 9 of the CVT unit 11, numeral 93 denotes a vehicle speed sensor for detecting the r.p.m. of the output shaft 5 of the continuously variable transmission and numeral 94 denotes a similar vehicle speed sensor also used for a signal of a speed meter as well as used as a backup device at which the vehicle speed sensor 93 fails. Numeral 95 denotes a sensor for detecting where of the respective shift positions P, R, N, D the shift lever or the manual valve of the continuously variable transmission is located, numeral 96 denotes a sensor composed of a potentiometer disposed in the engine for detecting a throttle opening and numeral 97 denotes a sensor disposed in the throttle opening sensor 96 for detecting whether an accelerator is in an entirely closed state or not. The signals from the above respective sensors are fetched by a CPU, a ROM or a RAM through an input processing circuit and an input interface circuit, respectively.

Numeral 101 denotes a solenoid for the low/high control valve 60 for switching to the low (L) mode and the high (H) mode and the solenoid executes ON/OFF operation. Numeral 102 denotes a solenoid used for the down-shift relief valve 58 for draining a high voltage side circuit and composed of a duty or linear solenoid. Numeral 103 denotes a solenoid used for the ratio control valve 57 for regulating a speed changing hydraulic pressure and composed of a duty or linear solenoid. Numeral 105 denotes a solenoid used for the primary regulator valve 56 for controlling a line pressure and composed of a linear solenoid. The above respective solenoids are driven through a solenoid drive circuit 106 for generating a predetermined voltage or output based on the signals from an output interface circuit, respectively and the operations of the respective solenoids are checked by a monitor circuit 107 to determine their failure as well as they determine their failure by themselves.

Numeral 109 denotes an electronic control unit for controlling the engine and numeral 110 denotes a circuit for issuing a signal for temporarily reducing torque generated by the engine by delaying an ignition timing angle, shutting-off fuel supply etc. to ease shock caused in speed change. Numeral 111 denotes a processing circuit for inputting engine r.p.m. Numeral 112 denotes a checker composed of an indicator lamp and the like for outputting the result of self-diagnosis when the electronic control unit 90 fails and numeral 113 denotes a circuit for outputting the result of the self-diagnosis in the above failure. Numeral 115 denotes a display unit such as low (L) mode and high (H) mode display lamps and the like for displaying the state of the continuously variable transmission and numeral 116 denotes a drive circuit for driving the display unit 115.

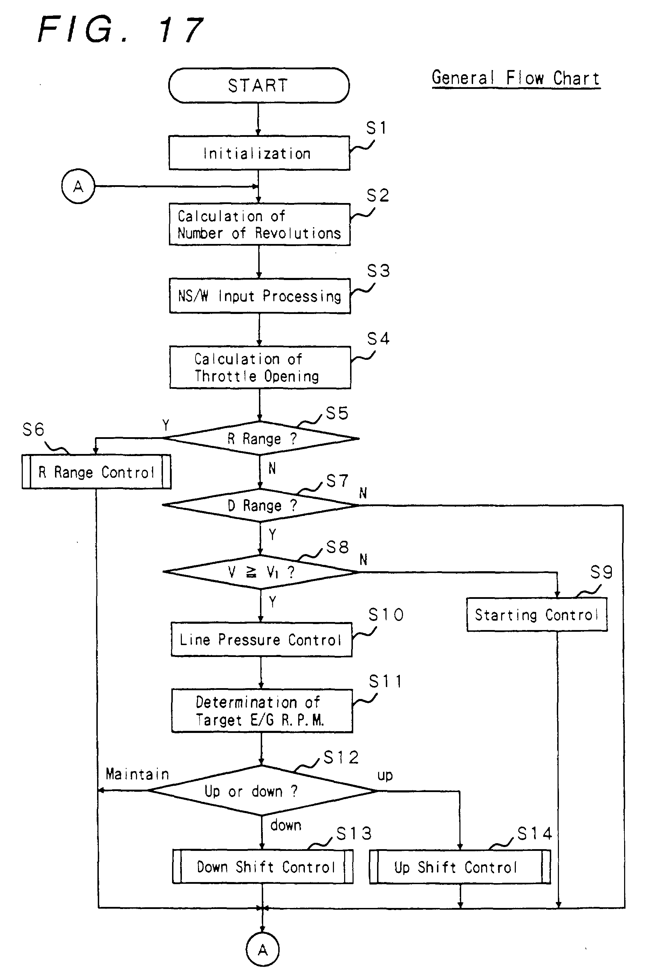

FIG. 17 is a general flowchart of the continuously variable transmission, wherein all the steps are initialized at the beginning of calculation at step S1. At step 2, r.p.m. is calculated based on the signals from the above r.p.m. sensors 91, 92 and 93. The signal from a neutral start switch is processed and a shifted position is read at step S3 and a throttle opening is calculated at step S4. Then, whether the manual valve is located in the reverse (R) range or not is determined based on the above step S3 at step S5, and when the determination is YES, an R range control to be described later will be executed (step S6). When the determination is NO, whether the D range is selected or not is determined (step S7), and when the D range is selected, it is determined whether or not a current vehicle speed V is equal to or less than a predetermined vehicle speed V1 (for example, 5 Km/h) (step S8). When the current vehicle speed is equal or less than the vehicle speed, start control is executed (step S9), whereas it is greater than the predetermined vehicle speed, line pressure control is executed to set a line pressure depending upon whether the low (L) mode is selected or the high (H) mode is selected, the throttle opening and the pulley ratio (step S10). Further, a target engine r.p.m. is read and determined from the map of a preset optimum fuel consumption curve based on the throttle opening at step S11. Then. which of down-shift and up-shift must be selected or otherwise the current state must be maintained is determined by comparing the current engine r.p.m. with the above target engine r.p.m. (step S12) and the down-shift control (step S13) or the up-shift control (step S14) to be described later will be executed respectively.

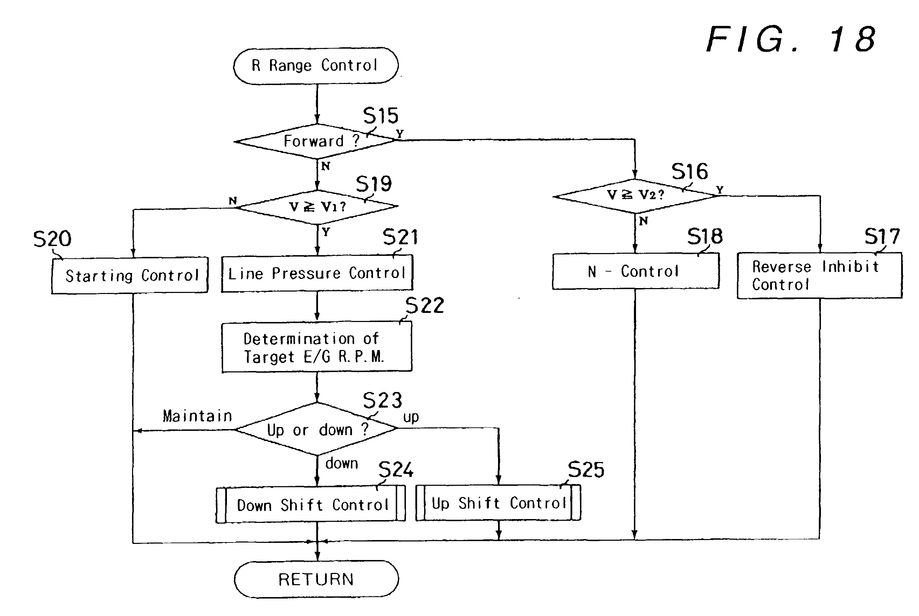

FIG. 18 is a flowchart showing a subroutine of the reverse (R) range control, wherein whether a vehicle travels forward or not is determined first from the pulley ratio and vehicle speed at step S15. When the vehicle travels forward, whether the current vehicle speed V is greater than a predetermined vehicle speed V2 (for example, 5 Km/h) or not is determined (step S16). When the current vehicle speed is greater than the predetermined vehicle speed, control for prohibiting reverse operation is executed by, for example, the release of both the high clutch C_{H} and low clutch C_{L}, or the like (step S17). whereas when the vehicle speed is smaller than the predetermined vehicle speed, neutral (N) control is executed (step S18).

In the neutral control, the axial forces of the primary pulley 7 and secondary pulley 9 are controlled to be substantially equalized. Otherwise, at least the difference between the axial force of the primary pulley and the axial force of the secondary pulley is set to a value smaller than the difference of the axial forces of both the pulleys which is determined by the input torque of the CVT and the pulley ratio at the time when output torque is in a positive direction within the range in which the relative relationship in magnitude of the axial forces is not reversed or to a value smaller than the difference of the axial forces of the primary and secondary pulleys which is determined by the input torque of the CVT unit and the pulley ratio at the time when the output torque is in a negative direction within the range in which the relative relationship in magnitude of the axial forces is not reversed. More specifically, in the double chamber type control mechanisms 54, 54₁ shown in FIG. 4 to FIG. 7 and FIG. 14, the hydraulic pressures in both the second hydraulic chambers 47, 49 of both the primary and secondary hydraulic servos 32, 33 are released in the state that hydraulic pressures are supplied to both the first hydraulic chambers 45, 46 of the primary and secondary hydraulic servos 32, 33 so as to equalize the axial forces of both the pulleys 7 and 9. Further, in the double regulator type control mechanisms 54' and 542 shown in FIG. 9 to FIG 12 and FIG. 15, equal hydraulic pressures are supplied to both the primary and secondary hydraulic servos 32 and 33 by entirely opening the ratio control valve (secondary regulator valve) 57 so as to equalize the axial forces of both the pulleys 7 and 9. With these operations, the CVT unit 11 is converged by itself so that the output from the output shaft 5 is made to zero regardless of the r.p.m. of the output shaft and stably maintained at the neutral position where the r.p.m. of the output shaft 5 is made to zero. Note, the aforesaid neutral control is described in the specification and drawings of Japanese Patent Application Laid-Open No. 7-66234 in detail and the content thereof is applicable to this embodiment as it is.

When it is determined that the vehicle travels backward at step S15, the current vehicle speed V is compared with the predetermined vehicle speed V1 (for example, 5 Km/h) (step S19) and when the current vehicle speed V is smaller than the predetermined vehicle speed V1. start control is executed (step S20), whereas when the current vehicle speed V is greater than the predetermined vehicle speed V1. line pressure control is executed to set a line pressure based on the throttle opening and pulley ratio (step S21). Further, a target engine r.p.m. is determined by reading the map likewise the above-mentioned (refer to step S10) at step S22. Then, any of up-shift, down-shift and the maintenance of the current state is determined likewise the above step S12 (step S23) and the down-shift control (step S24) or the up-shift control (step S25) to be described later will be executed, respectively.

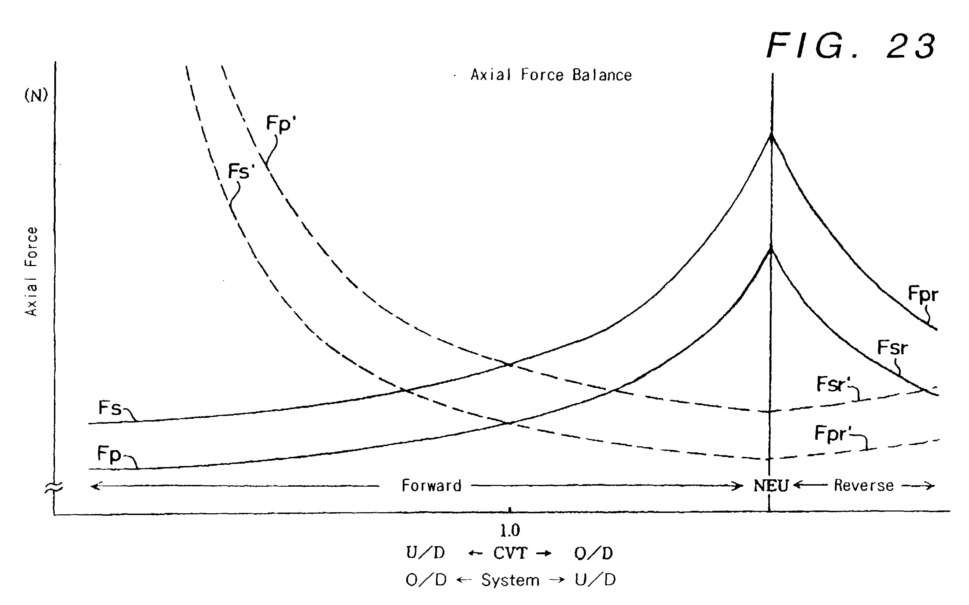

Note, the CVT unit 11 is located at the O/D end and the speed increasing rotation transmitted from the CVT unit to the sun gear 19s is synthesized with the constant rotation transmitted from the power transmission unit 26 to the carrier 19c by the planetary gear 19 and a reverse rotation is taken out from the output shaft 5 integrally arranged with the ring gear 19r in the above reverse (R) control. At the time, however, the torque output from the CVT unit 11 is reversed across the neutral position (output from the output shaft 5 is zero) based on the torque circulation and power is transmitted from the primary pulley 7 to the secondary pulley 9 in the CVT unit 11 as shown in FIG. 2. In the reverse control, the manual valves 59, 59' are located at the reverse (R) position as shown in FIG. 7, FIG. 8, FIG. 12, FIG. 13, FIG. 14, FIG. 15 and the hydraulic pressure of the hydraulic servo 32 is set higher than that of the hydraulic servo 33 when positive torque is transmitted (transmitted to the engine and wheels). Consequently, the axial force Fpr of the primary pulley 7 is made higher than the axial force Fsr of the secondary pulley 9 as shown in FIG. 23 so that the relationship of axial forces in coincidence with the aforesaid torque transmission direction is established. In this state, the axial forces Fpr and Fsr of both the pulleys 7, 9 are properly changed so as to properly change a speed by the proper control of the ratio control valve 57.

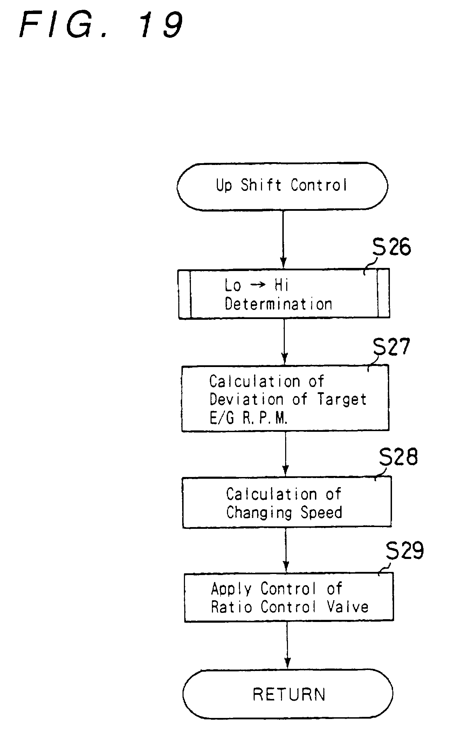

FIG. 19 is a flowchart showing up-shift control in the D range shown at step S14, wherein it is determined whether a speed is to be changed from the low (L) mode to the high (H) mode to be described later at step S26. Note, R range control is not executed at step S26. Further, the difference between a current engine r.p.m. and a target engine r.p.m. and the alteration of the difference are calculated (step S27) and a speed changing speed is calculated based on the calculation (step S28), whereby the application control of the ratio control valve 57 is executed (step S29).

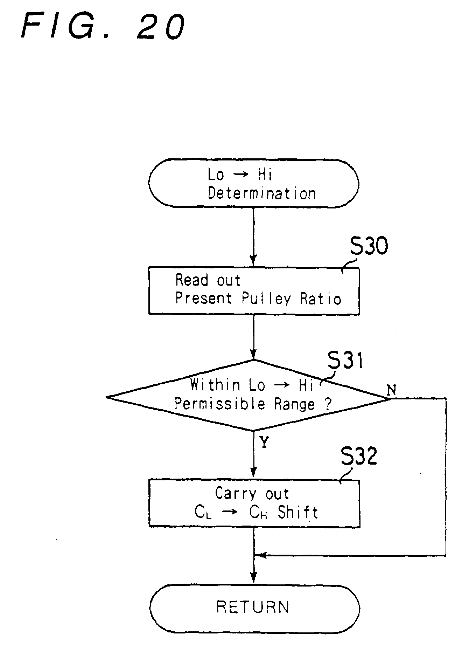

FIG. 20 is a subroutine showing the determination of Lo → Hi at the above step S26. At step S30, a pulley ratio is calculated based on the signals from the r.p.m. sensors 91, 92 of the primary pulley 7 and secondary pulley 9. Then, it is determined whether the pulley ratio is within the range in which a speed change from the low mode to the high mode is permitted (step S31) and when the pulley ratio is within the range, the low/high control valve 60 is switched to thereby change the engagement with the low clutch C_{L} to the engagement with the high clutch C_{H} (step S32).

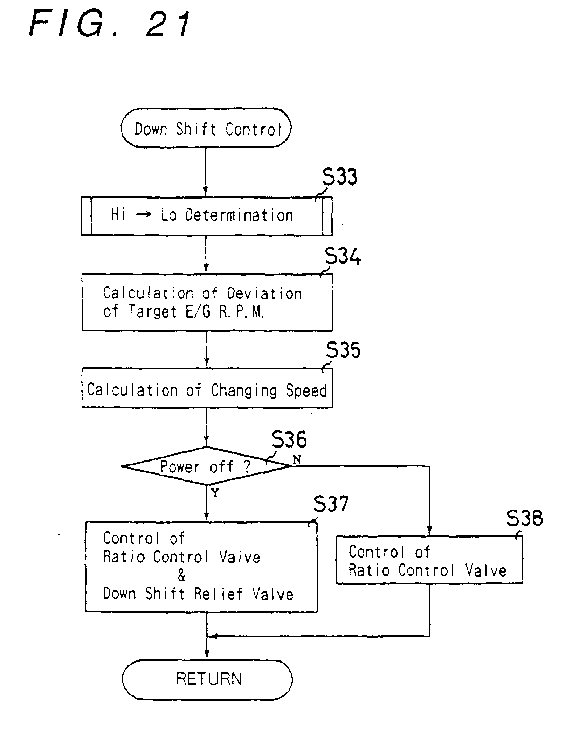

FIG. 21 is a flowchart showing down-shift control shown at step S13. wherein it is determined at step S33 whether a speed change from the high (H) mode to the low (L) mode to be described later is to be executed or not (this is not executed in the R range control). Further, the difference between a current engine r.p.m. and a target engine r.p.m. and the alteration of the difference are calculated (step S34) and a speed changing speed is calculated based on the calculation (step S35). Further, whether down-shift is power-off down-shift or not is determined based on the signals from the throttle opening sensor 96 and idle switch 97 (step S36). Then, when a coast state is achieved by power-off, that is, by releasing depression of an accelerator pedal, or the like, the ratio control valve 57 is controlled as well as the down-shift relief valve 58 is controlled (step S37), whereas when down-shift is executed in a power- on state, that is, in an accelerated state in which the accelerator pedal is abruptly depressed, the ratio control valve 57 is controlled (step S38).

That is, the coast state is in a negative torque state in which torque is transmitted from the wheels to the engine as shown at step S37. In the negative torque state, however, the relative relationship in magnitude between the axial force Fp' (Fpr') of the primary pulley 7 and the axial force Fs' (Fsr') of the secondary pulley 9 is reversed from the axial forces Fp, Fs (Fpr, Fsr) in a positive torque (engine wheels) state shown by the solid lines of FIG. 23, as shown by the dash lines of the drawing. At the time, since the down-shift relief valve 58 is drained in the double chamber type control mechanism 54 shown in FIG. 5, the first hydraulic chamber 46 of the secondary hydraulic servo 33 is released, whereby the axial force Fp' of the primary pulley 7 is made higher than the axial force Fs' of the secondary pulley 9, thus the speed change of the CVT unit 11 is executed by the proper adjustment of the ratio control valve 57 in this state.

Further, in the double regulator type control mechanism 54' shown in FIG. 10, since the down-shift relief valve 58 is drained, the secondary hydraulic servo 33 is released, whereby the axial force Fp' of the primary pulley is made higher than the axial force Fs' of the secondary pulley.

Note, although an oil supply passage to the primary hydraulic servo 32 is reversed from that to the secondary hydraulic servo 33 based on the manual valve in the reverse (R) control shown in FIG. 7 and FIG. 11, the pressure of the hydraulic servo having a higher hydraulic pressure is reduced so that the axial force Fsr' of the secondary pulley is made higher than the axial force Fpr' of the primary pulley.

Further, down shift control executed at step S38 when power is turned on will be described. Since the ratio control valve 57 is controlled in a pressure reducing direction in the double chamber type control mechanism 54 shown in FIG. 5. the hydraulic pressure of the secondary hydraulic servo 33 is made relatively smaller than that of the primary hydraulic servo 32, whereas since the ratio control valve 57 is controlled in a pressure increasing direction in the double regulator type control mechanism 54' shown in FIG. 10, the hydraulic pressure of the secondary hydraulic servo 33 is made relatively smaller than that of the primary hydraulic servo 32. With this operation, since the ratio of the axial force FS of the secondary pulley and the axial force FP of the primary pulley is reduced, the speed of the CVT unit 11 is abruptly changed in a speed increasing (O/D) direction and thus the speed of the transmission 1 is abruptly changed in a speed reducing (U/D) direction as a whole.

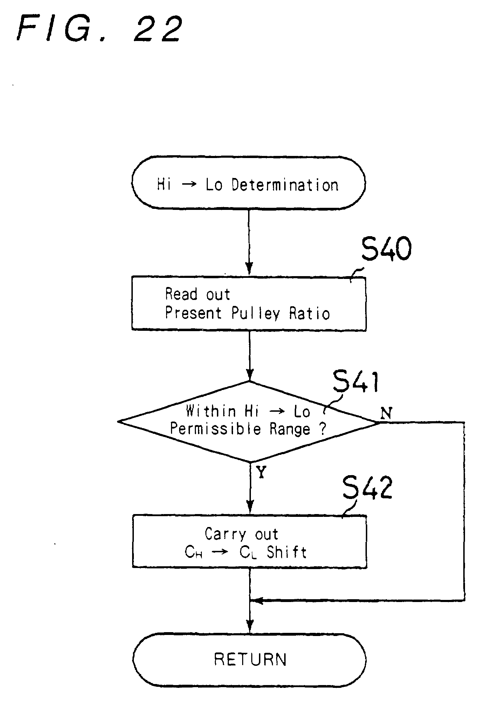

FIG. 22 shows a subroutine for determining Hi → Lo at the above step S33. A current pulley ratio is read based on the signals from the r.p.m. sensors of the primary pulley 7 (= input shaft 3) and secondary pulley 9 (step S40) and it is determined whether the pulley ratio is within the range in which a speed change is permitted from the high mode to the low mode (step S41). When the pulley ratio is within the range, the low/high control valve 60 is switched so as to change the engagement from the high clutch C_{H} to the low clutch C_{L} (step S42).

The speed is changed between the low (L) mode and high (H) mode by the change of engagement of the low clutch C_{L} and high clutch C_{H} executed at the above steps S32 and S42. In the low mode, a positive rotation is taken out from the output shaft 5 by the aforesaid synthesization of both the rotations of the power transmission unit 26 and CVT unit 11 executed by the planetary gear 19. At the time, power is transmitted from the secondary pulley 9 to the primary pulley 7 by the torque circulation in the CVT unit 11. On the other hand, in the high mode, since the rotation output from the CVT unit 11 is transmitted to the output shaft 5 as it is, power is transmitted from the primary pulley 7 to the secondary pulley 9 in the CVT unit 11.

At the time, the hydraulic pressures of the primary hydraulic servo 32 and secondary hydraulic servo 33 are switched by switching the low/high control valves 60, 60' and 60₁ as shown in FIG. 6, FIG. 11, FIG. 14 and FIG. 15. With this operation, the axial force FS of the secondary pulley 9 is made higher than the axial force FP of the primary pulley 7 in the low mode and the axial force of the primary pulley is made higher than that of the secondary pulley in the high mode in order to coincide with the above direction of power transmission. Note, the above description relates to the transmission of positive torque and this is reversed in the transmission of negative torque by the down-shift relief valve as described above.

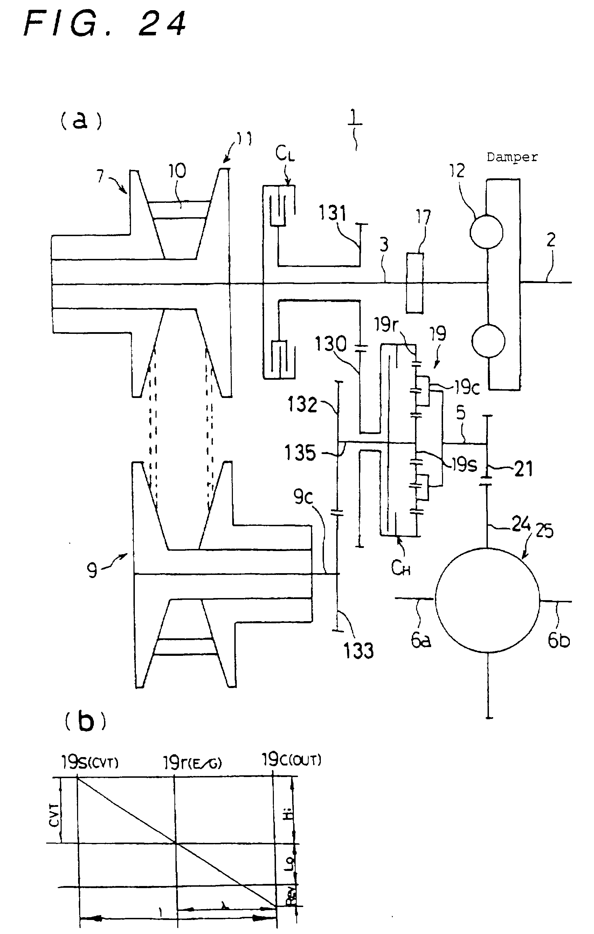

Next, a modified example of the power transmission mechanism of the continuously variable transmission will be described with reference to FIG. 24.

FIG. 24 shows an embodiment using a dual pinion planetary gear 19. The ring gear 19r of the planetary gear can be coupled with the input shaft 3 through gears 130, 131 and the low clutch C_{L} (first rotary element), the sun gear 19s thereof can be coupled with the secondary pulley 9 through gears 132, 133 (second rotary element), the carrier 19c thereof can be coupled with the output shaft 5 (third rotary element) and the ring gear 19r can be coupled with the sun gear 19s through the high clutch C_{H}. Then, the ring gear 19r and sun gear 19s are rotated in the same direction. Note, the third rotary element may be composed of the sun gear in place of the carrier and the first and second rotary elements may be composed of the carrier, the sun gear and the ring gear which do not serve as the third rotary element, respectively.

In this embodiment, the engine torque from the input shaft 3 is transmitted to the ring gear 19r of the planetary gear 19 through the low clutch C_{L} and gears 131, 130 as well as to the sun gear 19s through the CVT unit 11 and gears 133, 132 in the low mode (Lo) as shown in the graph showing a speed of FIG. 24(b). At the time, torque circulation is caused by the planetary gear 19 likewise the above embodiment and an output is applied from the carrier 19c to the output shaft 5 in an increasing/decreasing direction opposite to that of the CVT unit 11 with the secondary pulley 9 serving as a driving side and the primary pulley 7 serving as a driven side in the CVT unit 11. Further, when the CVT unit 11 is in a predetermined speed increasing (O/D) state, the rotation of the carrier 19c is reversed, that is, made to a reverse (Rev) rotation as well as the direction in which torque is transmitted from the CVT unit 11 is reversed. In addition, in the high mode (Hi), the engine torque from the output shaft 5 is transmitted to a shaft 135 through the CVT unit 11 and gears 132, 133 as well as the planetary gear 19 is integrally rotated by the connection of the high clutch C_{H} in the high mode, thus the speed changing torque of the above shaft 135 is transmitted to the output shaft 5 as it is in the CVT unit.

## Claims

1. A continuously variable transmission (1) comprising:
an input shaft (3) associated with an engine output shaft (2);
an output shaft (5) associated with wheels;
a belt type continuously variable transmission unit (11) having a first pulley (7) associated with said input shaft, a second pulley (9), a belt (10) trained around both the pulleys and axial force actuating means (32, 33) for applying axial forces to both the pulleys for changing the pulley ratio of said first and second pulleys;
a planetary gear (19) having at least first, second and third rotary elements (19s, 19c, 19r) with said first rotary element (19c) associated with said input shaft, said second rotary element (19s) associated with said second pulley and said third rotary element (19r) associated with said output shaft, respectively;
a first clutch (C_{L}) interposed between said input shaft (3) and said first rotary element (19c), where a power transmission therebetween is engaged or disengaged by said first clutch;
a second clutch (C_{H}) interposed between any two elements of said first, second, and third rotary elements of said planetary gear, where a power transmission therebetween is engaged or disengaged by said second clutch;
Low-High shifting means (60) for shifting between a Low mode for providing a comparatively high torque ratio by engaging said first clutch and a High mode for providing a comparatively low torque ratio by engaging said second clutch, wherein a direction of a torque transmission between said first pulley and said second pulley of said belt type continuously variable transmission unit is changed by switching said Low mode and said High mode;
control means (54) for controlling said axial force actuating means so that axial forces acting on said first and second pulleys produce a difference corresponding to the pulley ratio; and
switching means (79, 80) for changing the relative relationship in magnitude between the axial forces which are caused to act on said first and second pulleys by said control means based on switching between said Low mode and said High mode by said Low-High shifting means so that said relative relationship in magnitude is reversed,
wherein:
said axial force actuating means has a first hydraulic servo (32) acting on said first pulley (7) and a second hydraulic servo (33) acting on said second pulley (9) and applies axial forces to said first and second pulleys by supplying hydraulic pressures from an oil pump (17) to said first and second hydraulic servos; and
said switching means is a switching valve for switching the hydraulic pressure acting on said first hydraulic servo and the hydraulic pressure acting on said second hydraulic servo, **characterised in that**
each of said first and second hydraulic servos (32, 33) has a plurality of hydraulic chambers (45, 47 and 46, 49) respectively,
said switching valve selectively switches said hydraulic chambers to which hydraulic pressures are supplied to thereby reverse the effective pressure-receiving areas of said first and second hydraulic servos.

2. A transmission according to claim 1,
each of said first and second hydraulic servos (32 and 33) has at least a first hydraulic chamber (45, 46) and a second hydraulic chamber (47, 49) respectively as well as the first hydraulic chambers of said both hydraulic servos have the same effective pressure-receiving areas;
said control means (54) has a regulator valve (56) and a ratio control valve (57), the hydraulic pressure from said regulator valve is supplied to the first hydraulic chambers (45, 46) of said both hydraulic servos at all times as well as the hydraulic pressure from said ratio control valve (57) is supplied to the second hydraulic chamber (47, 49) of any one of said both hydraulic servos: and
said switching valve (79, 80) reverses the communication of said ratio control valve (57) with any one of said second hydraulic chambers (47, 49) to the other of them.

3. A transmission according to claim 2, wherein said regulator valve (56) and said ratio control valve (57) are interposed between said oil pump (17) and said switching valve (79, 80).

4. A continuously variable transmission (1) comprising:
an input shaft (3) associated with an engine output shaft (2);
an output shaft (5) associated with wheels;
a belt type continuously variable transmission unit (11) having a first pulley (7) associated with said input shaft, a second pulley (9), a belt (10) trained around both the pulleys and axial force actuating means (32, 33) for applying axial forces to both the pulleys for changing the pulley ratio of said first and second pulleys;
a planetary gear (19) having at least first, second and third rotary elements (19s, 19c, 19r) with said first rotary element (19c) associated with said input shaft, said second rotary element (19s) associated with said second pulley and said third rotary element (19r) associated with said output shaft, respectively;
a first clutch (C_{L}) interposed between said input shaft (3) and said first rotary element (19c), where a power transmission therebetween is engaged or disengaged by said first clutch;
a second clutch (C_{H}) interposed between any two elements of said first, second, and third rotary elements of said planetary gear, where a power transmission therebetween is engaged or disengaged by said second clutch;
Low-High shifting means (60) for shifting between a Low mode for providing a comparatively high torque ratio by engaging said first clutch and a High mode for providing a comparatively low torque ratio by engaging said second clutch, wherein a direction of a torque transmission between said first pulley and said second pulley of said belt type continuously variable transmission unit is changed by switching said Low mode and said High mode;
control means (54) for controlling said axial force actuating means so that axial forces acting on said first and second pulleys produce a difference corresponding to the pulley ratio; and
switching means (79, 80) for changing the relative relationship in magnitude between the axial forces which are caused to act on said first and second pulleys by said control means based on switching between said Low mode and said High mode by said Low-High shifting means so that said relative relationship in magnitude is reversed,
wherein:
said axial force actuating means has a first hydraulic servo (32) acting on said first pulley (7) and a second hydraulic servo (33) acting on said second pulley (9) and applies axial forces to said first and second pulleys by supplying hydraulic pressures from an oil pump (17) to said first and second hydraulic servos; and
said switching means is a switching valve for switching the hydraulic pressure acting on said first hydraulic servo and the hydraulic pressure acting on said second hydraulic servo, **characterised in that**
said control means (54) has first and second regulator valves (56, 57) for adjusting the hydraulic pressure from said oil pump (17) to respective hydraulic pressures, any one of said first and second regulator valves is caused to communicate with any one of said first and second hydraulic servos (32, 33) and the other of said regulator valves is caused to communicate with the other of said hydraulic servos, respectively; and
said switching valve (79, 80) reverses the communication of said first and second regulator valves with said first and second hydraulic servos.

5. A transmission according to claim 4, wherein said first and second regulator valves (56, 57) are interposed between said oil pump (17) and said switching valve (79, 80).

6. A transmission according to any of claims 1 to 5, comprising:
a relief valve (58) which makes the hydraulic pressure of said hydraulic servo (32 or 33) on which a high hydraulic ressure acts lower than the hydraulic pressure of said hydraulic servo (33 or 32) on which a low hydraulic pressure acts when it is determined that said vehicle is in a coast state.

7. A transmission according to any of claims 1 to 6, comprising:
a detecting means (S30, S40) for detecting a pully ratio of said belt type continuously variable transmission unit, and
a determining means (S31, S41) for performing a determination as to whether or not a switching movement of said Low-High shifthing means (60) is needed.

8. A transmission according to any of claims 1 to 7, wherein
when said first clutch (C_{L}) is engaged, said input shaft is coupled with said first pulley and said first rotary element, respectively so that the direction in said input shaft of the torque transmitted from said first pulley and the direction in said input shaft of the torque transmitted from said first rotary element are reversed each other, respectively.

9. A transmission according to any of claims 1 to 8, wherein
said Low-High shifting means is a Low-High shifting valve (60), which is localized in an oil passage for supplying said hydraulic pressure from said oil pump (17) to respective hydraulic servos (32, 33) of said first clutch (C_{L}) and said second clutch (C_{H}), and switches between supplying and releasing of said hydraulic servos, and
said switching valve (79, 80) is integrally constructed with said Low-High shifting valve (60).

10. A transmission according to any of claims 1 to 8, wherein:
said Low-High shifting means is a Low-High shifting valve (60), which is localized in an oil passage for supplying said hydraulic pressure from said oil pump (17) to respective hydraulic servos (32, 33) of said first clutch (C_{L}) and said second clutch (C_{H}), and switches between supplying and releasing of said hydraulic servos, and
said switching valve (79, 80) is contructed so as to be separated from said Low-High shifting valve (60) and is switched by an hydraulic pressure of said first or second clutch hydraulic servo. which is generated by switching said Low-High shifting valve.

## Patentansprüche

1. Stufenloses Getriebe (1), aufweisend:
eine Antriebswelle (3), die einer Motorabtriebswelle (2) zugeordnet ist,
eine Abtriebswelle (5), die Rädern zugeordnet ist,
eine stufenlose Riemengetriebeeinheit (11), die eine der Antriebswelle zugeordnete erste Riemenscheibe (7), eine zweite Riemenscheibe (9), einen um beide Riemenscheiben gelegten Riemen (10) und eine Axialkraft-Betätigungseinrichtung (32, 33) zum Anwenden von Axialkräften auf beide Riemenscheiben zum Ändern des Riemenscheibenverhältnisses der ersten und der zweiten Riemenscheibe aufweist,
ein Planetengetriebe (19), das mindestens ein erstes, ein zweites und ein drittes drehbares Element (19s, 19c, 19r) aufweist, wobei das erste drehbare Element (19c) der Antriebswelle zugeordnet ist, das zweite drehbare Element (19s) der zweiten Riemenscheibe zugeordnet ist und das dritte drehbare Element (19r) der Abtriebswelle zugeordnet ist,
eine erste Kupplung (C_{L}), die zwischen der Antriebswelle (3) und dem ersten drehbaren Element (19c) angeordnet ist,
wobei die Kraftübertragung zwischen ihnen durch die erste Kupplung hergestellt oder unterbrochen wird,
eine zweite Kupplung (C_{H}), die zwischen beliebigen zwei Elementen von dem ersten, dem zweiten und dem dritten drehbaren Element des Planetengetriebes angeordnet ist, wobei die Kraftübertragung zwischen ihnen durch die zweite Kupplung hergestellt oder unterbrochen wird,
eine Niedrig/Hoch-Schalteinrichtung (60) zum Schalten zwischen einem niedrigen Modus zum Bereitstellen eines vergleichsweise hohen Drehmomentverhältnisses durch Einrücken der ersten Kupplung und einem hohen Modus zum Bereitstellen eines vergleichsweise niedrigen Drehmomentverhältnisses durch Einrücken der zweiten Kupplung, wobei die Richtung der Drehmomentübertragung zwischen der ersten Riemenscheibe und der zweiten Riemenscheibe der stufenlosen Riemengetriebeeinheit durch Schalten des niedrigen Modus und des hohen Modus geändert wird,
eine Steuereinrichtung (54) zum derartigen Steuern der Axialkraft-Betätigungseinrichtung, daß die auf die erste und die zweite Riemenscheibe wirkenden Axialkräfte eine dem Riemenscheibenverhältnis entsprechende Differenz erzeugen, und
eine Schalteinrichtung (79, 80) zum Ändern der Betragsbeziehung zwischen den Axialkräften, die von der Steuereinrichtung auf der Grundlage des Schaltens zwischen dem niedrigen Modus und dem hohen Modus durch die Niedrig/Hoch-Schalteinrichtung auf die erste und die zweite Riemenscheibe einwirken gelassen werden, so daß die Betragsbeziehung umgekehrt wird,
wobei die Axialkraft-Betätigungseinrichtung eine auf die erste Riemenscheibe (7) wirkende erste hydraulische Servoeinrichtung (32) und eine auf die zweite Riemenscheibe (9) wirkende zweite hydraulische Servoeinrichtung (33) aufweist und die Axialkräfte auf die erste und die zweite Riemenscheibe ausübt, indem sie der ersten und der zweiten hydraulischen Servoeinrichtung Hydraulikdrücke von einer Ölpumpe (17) zuführt, und
wobei die Schalteinrichtung ein Schaltventil zum Schalten des auf die erste hydraulische Servoeinrichtung wirkenden Hydraulikdrucks und des auf die zweite hydraulische Servoeinrichtung wirkenden Hydraulikdrucks ist, **dadurch gekennzeichnet, daß**
jede von der ersten und der zweiten hydraulischen Servoeinrichtung (32, 33) jeweils mehrere hydraulische Kammern (45, 47 und 46, 49) aufweist und
das Schaltventil selektiv die hydraulischen Kammern schaltet, denen Hydraulikdrücke zugeführt werden, um dadurch die wirksamen Druckaufnahmebereiche der ersten und der zweiten hydraulischen Servoeinrichtung umzukehren.

2. Getriebe nach Anspruch 1,
wobei die erste und die zweite hydraulische Servoeinrichtung (32 und 33) jeweils mindestens eine erste hydraulische Kammer (45, 46) bzw. eine zweite hydraulische Kammer (47, 49) aufweisen und die ersten hydraulischen Kammern beider hydraulischen Servoeinrichtungen die gleichen wirksamen Druckaufnahmebereiche aufweisen,
wobei die Steuereinrichtung (54) ein Regelventil (56) und ein Verhältnissteuerventil (57) aufweist, wobei der Hydraulikdruck vom Regelventil den ersten hydraulischen Kammern (45, 46) beider hydraulischen Servoeinrichtungen stets zugeführt wird und der Hydraulikdruck vom Verhältnissteuerventil (57) den zweiten hydraulischen Kammern (47, 49) von einer der beiden hydraulischen Servoeinrichtungen zugeführt wird, und
wobei das Schaltventil (79, 80) die Verbindung des Verhältnissteuerventils (57) mit einer der zweiten hydraulischen Kammern (47, 49) zu der anderen von ihnen umkehrt.

3. Getriebe nach Anspruch 2, wobei das Regelventil (56) und das Verhältnissteuerventil (57) zwischen der Ölpumpe (17) und dem Schaltventil (79, 80) angeordnet sind.

4. Stufenloses Getriebe (1), aufweisend:
eine Antriebswelle (3), die einer Motorabtriebswelle (2) zugeordnet ist,
eine Abtriebsweile (5), die Rädern zugeordnet ist,
eine stufenlose Riemengetriebeeinheit (11), die eine der Antriebswelle zugeordnete erste Riemenscheibe (7), eine zweite Riemenscheibe (9), einen um beide Riemenscheiben gelegten Riemen (10) und eine Axialkraft-Betätigungseinrichtung (32, 33) zum Anwenden von Axialkräften auf beide Riemenscheiben zum Ändern des Riemenscheibenverhältnisses der ersten und der zweiten Riemenscheibe aufweist,
ein Planetengetriebe (19), das mindestens ein erstes, ein zweites und ein drittes drehbares Element (19s, 19c, 19r) aufweist, wobei das erste drehbare Element (19c) der Antriebswelle zugeordnet ist, das zweite drehbare Element (19s) der zweiten Riemenscheibe zugeordnet ist und das dritte drehbare Element (19r) der Abtriebswelle zugeordnet ist,
eine erste Kupplung (C_{L}), die zwischen der Antriebswelle (3) und dem ersten drehbaren Element (19c) angeordnet ist,
wobei die Kraftübertragung zwischen ihnen durch die erste Kupplung hergestellt oder unterbrochen wird,
eine zweite Kupplung (C_{H}), die zwischen beliebigen zwei Elementen von dem ersten, dem zweiten und dem dritten drehbaren Element des Planetengetriebes angeordnet ist, wobei die Kraftübertragung zwischen ihnen durch die zweite Kupplung hergestellt oder unterbrochen wird,
eine Niedrig/Hoch-Schalteinrichtung (60) zum Schalten zwischen einem niedrigen Modus zum Bereitstellen eines vergleichsweise hohen Drehmomentverhältnisses durch Einrücken der ersten Kupplung und einem hohen Modus zum Bereitstellen eines vergleichsweise niedrigen Drehmomentverhältnisses durch Einrücken der zweiten Kupplung, wobei die Richtung der Drehmomentübertragung zwischen der ersten Riemenscheibe und der zweiten Riemenscheibe der stufenlosen Riemengetriebeeinheit durch Schalten des niedrigen Modus und des hohen Modus geändert wird,
eine Steuereinrichtung (54) zum derartigen Steuern der Axialkraft-Betätigungseinrichtung, daß die auf die erste und die zweite Riemenscheibe wirkenden Axialkräfte eine dem Riemenscheibenverhältnis entsprechende Differenz erzeugen, und
eine Schalteinrichtung (79, 80) zum Ändern der Betragsbeziehung zwischen den Axialkräften, die von der Steuereinrichtung auf der Grundlage des Schaltens zwischen dem niedrigen Modus und dem hohen Modus durch die Niedrig-Hoch-Schalteinrichtung auf die erste und die zweite Riemenscheibe einwirken gelassen werden, so daß die relative Betragsbeziehung umgekehrt wird,
wobei die Axialkraft-Betätigungseinrichtung eine auf die erste Riemenscheibe (7) wirkende erste hydraulische Servoeinrichtung (32) und eine auf die zweite Riemenscheibe (9) wirkende zweite hydraulische Servoeinrichtung (33) aufweist und die Axialkräfte auf die erste und die zweite Riemenscheibe ausübt, indem sie der ersten und der zweiten hydraulischen Servoeinrichtung Hydraulikdrücke von einer Ölpumpe (17) zuführt, und
wobei die Schalteinrichtung ein Schaltventil zum Schalten des auf die erste hydraulische Servoeinrichtung wirkenden Hydraulikdrucks und des auf die zweite hydraulische Servoeinrichtung wirkenden Hydraulikdrucks ist, **dadurch gekennzeichnet, daß**
die Steuereinrichtung (54) ein erstes und ein zweites Regelventil (56, 57) zum Einstellen des Hydraulikdrucks von der Ölpumpe (17) auf die jeweiligen Hydraulikdrücke aufweist, wobei eines von dem ersten und dem zweiten Regelventil in Verbindung mit einer von der ersten und der zweiten hydraulischen Servoeinrichtung (32, 33) gebracht wird und wobei das andere von den Regelventilen in Verbindung mit der anderen der hydraulischen Servoeinrichtungen gebracht wird, und
wobei das Schaltventil (79, 80) die Verbindung des ersten und des zweiten Regelventils mit der ersten und der zweiten hydraulischen Servoeinrichtung umkehrt.

5. Getriebe nach Anspruch 4, wobei das erste und das zweite Regelventil (56, 57) zwischen der Ölpumpe (17) und dem Schaltventil (79, 80) angeordnet sind.

6. Getriebe nach einem der Ansprüche 1 bis 5, aufweisend:
ein Entlastungsventil (58), das den Hydraulikdruck der hydraulischen Servoeinrichtung (32 oder 33), auf die ein hoher Hydraulikdruck wirkt, auf einen Wert legt, der niedriger als der Hydraulikdruck der hydraulischen Servoeinrichtung (33 oder 32) ist, auf die ein niedriger Hydraulikdruck wirkt, wenn bestimmt wird, daß sich das Fahrzeug in einem Leerlaufzustand befindet.

7. Getriebe nach einem der Ansprüche 1 bis 6, aufweisend:
eine Erfassungseinrichtung (S30, S40) zum Erfassen eines Riemenscheibenverhältnisses der stufenlosen Riemengetriebeeinheit und
eine Erfassungseinrichtung (S31, S41) zum Bestimmen, ob eine Schaltbewegung der Niedrig/Hoch-Schalteinrichtung (60) erforderlich ist.

8. Getriebe nach einem der Ansprüche 1 bis 7, wobei, wenn die erste Kupplung (C_{L}) eingerückt ist, die Antriebswelle mit der ersten Riemenscheibe und dem ersten drehbaren Element gekoppelt wird, so daß die Richtung, in der bei der Antriebswelle das Drehmoment von der ersten Riemenscheibe übertragen wird, und die Richtung, in der bei der Antriebswelle das Drehmoment vom ersten drehbaren Element übertragen wird, zueinander entgegengesetzt sind.

9. Getriebe nach einem der Ansprüche 1 bis 8, wobei
die Niedrig/Hoch-Schalteinrichtung ein Niedrig/HochSchaltventil (60) ist, das sich in einer Ölleitung zum Zuführen des Hydraulikdrucks von der Ölpumpe (17) zu jeweiligen hydraulischen Servoeinrichtungen (32, 33) der ersten Kupplung (C_{L}) und der zweiten Kupplung (C_{H}) befindet und zwischen dem Versorgen und dem Freisetzen der hydraulischen Servoeinrichtungen umschaltet, und
wobei das Schaltventil (79, 80) integriert mit dem Niedrig-Hoch-Schaltventil (60) aufgebaut ist.

10. Getriebe nach einem der Ansprüche 1 bis 8, wobei
die Niedrig/Hoch-Schalteinrichtung ein Niedrig/Hoch-Schaltventil (60) ist, das sich in einer Ölleitung befindet und dem Zuführen des Hydraulikdrucks von der Ölpumpe (17) zu den jeweiligen hydraulischen Servoeinrichtungen (32, 33) der ersten Kupplung (C_{L}) und der zweiten Kupplung (C_{H}) dient und zwischen dem Versorgen und dem Freisetzen der hydraulischen Servoeinrichtungen umschaltet, und
wobei das Schaltventil (79, 80) so aufgebaut ist, daß es von dem Niedrig/Hoch-Schaltventil (60) getrennt ist und durch den Hydraulikdruck der hydraulischen Servoeinrichtung der ersten oder der zweiten Kupplung, der durch Schalten des Niedrig/Hoch-Schaltventils erzeugt wird, geschaltet wird.

## Revendications

1. Transmission à rapport variable en continu (1) comprenant :
un arbre d'entrée (3) associé à un arbre de sortie de moteur (2) ;
un arbre de sortie (5) associé à des roues ;
une unité de transmission à rapport variable en continu du type à courroie (11) comportant une première poulie (7) associée audit arbre d'entrée (3), une deuxième poulie (9), une courroie (10) enroulée autour des deux poulies, et des moyens d'application de forces axiales (32, 33) pour appliquer des forces axiales aux deux poulies pour changer le rapport de poulie desdites première et deuxième poulies ;
une unité d'engrenages planétaires (19) comportant au moins des premier, deuxième et troisième éléments rotatifs (19s, 19c, 19r), ledit premier élément rotatif (19c) étant associé audit arbre d'entrée, ledit deuxième élément rotatif (19s) étant apsocié à ladite deuxième poulie et ledit troisième élément rotatif (19r) étant associé audit arbre de sortie, respectivement ;
un premier embrayage (C_{L}) interposé entre ledit arbre d'entrée (3) et ledit premier élément rotatif (19c), une transmission de puissance entre ceux-ci étant engagée ou désengagée par ledit premier embrayage ;
un deuxième embrayage (C_{H}) interposé entre deux éléments quelconques parmi lesdits premier, deuxième et troisième éléments rotatifs de ladite unité d'engrenages planétaires, une transmission de puissance entre eux étant engagée ou désengagée par ledit deuxième embrayage ;
des moyens de changement de vitesse entre vitesse basse et vitesse haute (60) pour changer de vitesse entre un mode bas pour délivrer un rapport de couple comparativement élevé en engageant ledit premier embrayage et un mode haut pour délivrer un rapport de couple comparativement bas en engageant ledit deuxième embrayage, la direction d'une transmission de couple entre ladite première poulie et ladite deuxième poulie de ladite unité de transmission à rapport variable en continu du type à courroie étant changée en commutant ledit mode bas et ledit mode haut ;
des moyens de commande (54) pour commander lesdits moyens d'application de forces axiales de telle sorte que les forces axiales agissant sur lesdites première et deuxième poulies produisent une différence correspondant au rapport de poulie ; et
des moyens de commutation (79, 80) pour changer la relation de grandeur relative entre les forces axiales qui sont amenées à agir sur lesdites première et deuxième poulies à l'aide desdits moyens de commande en fonction de la commutation entre ledit mode bas et ledit mode haut par lesdits moyens de changement de vitesse entre vitesse basse et vitesse haute de telle sorte que ladite relation de grandeur relative soit inversée,
dans laquelle :
lesdits moyens d'application de forces axiales comportent un premier dispositif d'asservissement hydraulique (32) agissant sur ladite première poulie (7) et un deuxième dispositif d'asservissement hydraulique (33) agissant sur ladite deuxième poulie (9), et appliquent des forces axiales auxdites première et deuxième poulies en délivrant des pressions hydrauliques à partir d'une pompe à huile (17) auxdits premier et deuxième dispositifs d'asservissement hydrauliques (32, 33) ; et
lesdits moyens de commutation sont une vanne de commutation pour commuter la pression hydraulique agissant sur ledit premier dispositif d'asservissement hydraulique et la pression hydraulique agissant sur ledit deuxième dispositif d'asservissement hydraulique, **caractérisée en ce que** :
chacun desdits premier et deuxième dispositifs d'asservissement hydrauliques (32, 33) comporte une pluralité de chambres hydrauliques (45, 47 et 46, 49), respectivement,
ladite vanne de commutation commute sélectivement lesdites chambres hydrauliques auxquelles des pressions hydrauliques sont délivrées de façon à inverser par conséquent les surfaces de réception de pression efficaces desdits premier et deuxième dispositifs d'asservissement hydrauliques.

2. Transmission selon la revendication 1,
chacun desdits premier et deuxième dispositifs d'asservissement hydrauliques (32 et 33) comportant au moins une première chambre hydraulique (45, 46) et une deuxième chambre hydraulique (47, 49), respectivement, et, par ailleurs, les premières chambres hydrauliques desdits deux dispositifs d'asservissement hydrauliques ayant les mêmes surfaces de réception de pression efficaces ;
lesdits moyens de commands (54) comportant une vanne de régulateur et une vanne de commande de rapport (57), la pression hydraulique venant de ladite vanne de régulateur étant délivrée aux premières chambres hydrauliques (45, 46) desdits deux dispositifs d'asservissement hydrauliques à tout moment, et, par ailleurs, la pression hydraulique venant de ladite vanne de commande de rapport (57) étant délivrée à la deuxième chambre hydraulique (47, 49) de l'un quelconque desdits deux dispositifs d'asservissement hydrauliques ; et
ladite vanne de commutation (79, 80) inversant la communication de ladite vanne de commande de rapport (57) avec l'une quelconque parmi lesdites deuxièmes chambres hydrauliques (47, 49) et l'autre d'entre elles.

3. Transmission selon la revendication 2, dans laquelle ladite vanne de régulateur (56) et ladite vanne de commande de rapport (57) sont interposées entre ladite pompe à huile (17) et ladite vanne de commutation (79, 80).

4. Transmission à rapport variable en continu (1) comprenant :
un arbre d'entrée (3) associé à un arbre de sortie de moteur (2) ;
un arbre de sortie (5) associé à des roues ;
une unité de transmission à rapport variable en continu du type à courroie (11) comportant une première poulie (7) associée audit arbre d'entrée, une deuxième poulie (9), une courroie (10) enroulée autour des deux poulies, et des moyens d'application de forces axiales (32, 33) pour appliquer des forces axiales aux deux poulies pour changer le rapport de poulie desdites première et deuxième poulies ;
une unité d'engrenages planétaires (19) comportant au moins des premier, deuxième et troisième éléments rotatifs (19s, 19c, 19r), ledit premier élément rotatif (19c) étant associé audit arbre d'entrée, ledit deuxième élément rotatif (19s) étant associé à ladite deuxième poulie et ledit troisième élément rotatif (19r) étant associé audit arbre de sortie, respectivement ;
un premier embrayage (C_{L}) interposé entre ledit arbre d'entrée (3) et ledit premier élément rotatif (19c), une transmission de puissance entre eux étant engagée ou désengagée par ledit premier embrayage ;
un deuxième embrayage (CH) interposé entre deux éléments quelconques parmi lesdits premier, deuxième et troisième éléments rotatifs de ladite unité d'engrenages planétaires, une transmission de puissance entre eux étant engagée ou désengagée par ledit deuxième embrayage ;
des moyens de changement de vitesse entre vitesse basse et vitesse haute (60) pour changer de vitesse entre un mode bas pour délivrer un rapport de couple comparativement élevé en engageant ledit premier embrayage et un mode haut pour délivrer un rapport de couple comparativement bas en engageant ledit deuxième embrayage, la direction d'une transmission de couple entre ladite première poulie et ladite deuxième poulie de ladite unité de transmission à rapport variable en continu du type à courroie étant changée par commutation dudit mode bas et dudit mode haut ;
des moyens de commande (54) pour commander lesdits moyens d'application de forces axiales de telle sorte que les forces axiales agissant sur lesdites première et deuxième poulies produisent une différence correspondant au rapport de poulie ; et
des moyens de commutation (79, 80) pour changer la relation de grandeur relative entre les forces axiales qui sont amenées à agir sur lesdites première et deuxième poulies par lesdits moyens de commande en fonction de la commutation entre ledit mode bas et ledit mode haut par lesdits moyens de changement de vitesse entre vitesse basse et vitesse haute de telle sorte que ladite relation de grandeur relative soit inversée,
lesdits moyens d'application de forces axiales comportant un premier dispositif d'asservissement hydraulique (32) agissant sur ladite première poulie (7) et un deuxième dispositif d'asservissement hydraulique (33) agissant sur ladite deuxième poulie (9), et appliquant des forces axiales auxdites première et deuxième poulies en délivrant des pressions hydrauliques à partir d'une pompe à huile (17) auxdits premier et deuxième dispositifs d'asservissement hydrauliques ; et
lesdits moyens de commutation étant une vanne de commutation pour commuter la pression hydraulique agissant sur ledit premier dispositif d'asservissement hydraulique et la pression hydraulique agissant sur ledit deuxième dispositif d'asservissement hydraulique, **caractérisée en ce que** :
lesdits moyens de commande (54) comportent des première et deuxième vannes de régulateur (56, 57) pour ajuster la pression hydraulique venant de ladite pompe à huile (17) à des pressions hydrauliques respectives, l'une quelconque desdites première et deuxième vannes de régulateur étant amenée à communiquer avec l'un quelconque desdits premier et deuxième dispositifs d'asservissement hydrauliques (32, 33) et l'autre desdites vannes de régulateur étant amenée à communiquer avec l'autre desdits dispositifs d'asservissement hydrauliques, respectivement ; et
ladite vanne de commutation (79, 80) inverse la communication desdites première et deuxième vannes de régulateur (57) avec lesdits premier et deuxième dispositifs d'asservissement hydraulique.

5. Transmission selon la revendication 4, dans laquelle lesdites première et deuxième vannes de régulateur (56, 57) sont interposées entre ladite pompe à huile (17) et ladite vanne de commutation (79, 80).

6. Transmission selon l'une quelconque des revendications 1 à 5, comprenant :
une soupape de surpression (58) qui rend la pression hydraulique dudit dispositif d'asservissement hydraulique (32 ou 33) sur lequel agit une pression hydraulique élevée inférieure à la pression hydraulique dudit dispositif d'asservissement hydraulique (33 ou 32) sur lequel agit une pression hydraulique basse lorsqu'il est déterminé que ledit véhicule est dans un état de roue libre.

7. Transmission selon l'une quelconque des revendications 1 à 6, comprenant :
des moyens de détection (S30, S40) pour détecter un rapport de poulie de ladite unité de transmission à rapport variable en continu du type à courroie, et
des moyens de détermination (S31, S41) pour effectuer une détermination du fait que oui ou non un mouvement de commutation desdits moyens de changement de vitesse entre vitesse basse et vitesse haute (60) est nécessaire.

8. Transmission selon l'une quelconque des revendications 1 à 7, dans laquelle :
lorsque ledit premier embrayage (C_{L}) est engagé, ledit arbre d'entrée est couplé à ladite première poulie et audit premier élément rotatif, respectivement, de telle sorte que la direction, dans ledit arbre d'entrée, du couple transmis à partir de ladite première poulie, et la direction, dans ledit arbre d'entrée, du couple transmis à partir dudit premier élément rotatif, soient l'inverse l'une de l'autre, respectivement.

9. Transmission selon l'une quelconque des revendications 1 à 8, dans laquelle :
lesdits moyens de changement de vitesse entre vitesse basse et vitesse haute sont une vanne de changement de vitesse entre vitesse basse et vitesse haute (60), qui est localisée dans un passage d'huile pour délivrer ladite pression hydraulique à partir de ladite pompe à huile (17) à des dispositifs d'asservissement hydrauliques respectifs (32, 33) dudit premier embrayage (C_{L}) et dudit deuxième embrayage (C_{H}), et effectuent une commutation entre l'alimentation et le relâchement desdits dispositifs d'asservissement hydrauliques ; et
ladite vanne de commutation (79,80) est construite d'une seule pièce avec ladite vanne de changement de vitesse entre vitesse basse et vitesse haute (60).

10. Transmission selon l'une quelconque des revendications 1 à 8, dans laquelle :
lesdits moyens de changement de vitesse entre vitesse basse et vitesse haute sont une vanne de changement de vitesse entre vitesse basse et vitesse haute (60), qui est localisée dans un passage d'huile pour délivrer ladite pression hydraulique à partir de ladite pompe à huile (17) à des dispositifs d'asservissement hydrauliques respectifs (32, 33) dudit premier embrayage (C_{L}) et dudit deuxième embrayage (C_{H}), et effectuent une commutation entre l'alimentation et le relâchement desdits dispositifs d'asservissement hydrauliques ; et
ladite vanne de commutation (79,80) est construite de façon à être séparée de ladite vanne de changement de vitesse entre vitesse basse et vitesse haute (60), et est commutée par une pression hydraulique desdits dispositifs d'asservissement hydrauliques de premier ou de deuxième embrayage, celle-ci étant générée par la commutation de la vanne de changement de vitesse entre vitesse basse et vitesse haute.
